# FASCICULE DE BREVET EUROPEEN

(11) **EP 3 997 419 B1**
(45) Date de publication et mention de la délivrance du brevet: **24.05.2023**
(21) Numéro de dépôt: 20757642.2
(22) Date de dépôt: 26.07.2020
(51) Int. Cl.: G01D 5/353, H04B 10/25

(54) **PROCEDE ET DISPOSITIF DE RECONSTRUCTION D'UNE ONDE ELECTROMAGNETIQUE VECTORIELLE RETRODIFFUSEE**
VERFAHREN UND VORRICHTUNG ZUR REKONSTRUKTION EINER RÜCKGESTREUTEN ELEKTROMAGNETISCHEN VEKTORWELLE
METHOD AND DEVICE FOR RECONSTRUCTING A BACKSCATTERED ELECTROMAGNETIC VECTOR WAVE

(30) Priorité: 26.07.2019 FR 1908568
(43) Date de publication de la demande: 18.05.2022
(73) Titulaire: Febus Optics, 64000 Pau (FR)
(72) Inventeur: CALBRIS, Gaëtan, 64110 Jurançon (FR); LANTICQ, Vincent, 64460 Casteide-Doat (FR); ALMORIC, Etienne, 91320 Wissous (FR)
(74) Mandataire: A.P.I. Conseil
(86) Numéro de dépôt international: PCT/FR2020/051368
(87) Numéro de publication internationale: WO 2021/019171

(56) Documents cités:
- WO-A1-2010/045286
- WO-A2-2012/030814
- TU GUOJIE ET AL: "A phase-sensitive optical time-domain reflectometry system with an electrical I/Q demodulator", MICROFLUIDICS, BIOMEMS, AND MEDICAL MICROSYSTEMS XI : 3 - 5 FEBRUARY 2013, SAN FRANCISCO, CALIFORNIA, UNITED STATES ; [PART OF SPIE PHOTONICS WEST]; IN: PROCEEDINGS OF SPIE; ISSN 0277-786X; VOL. 8615; [PROCEEDINGS OF SPIE; ISSN 0277-786X; VOL. 8615],, vol. 10821, 23 octobre 2018 (2018-10-23), pages 1082123-1082123, XP060112844, DOI: 10.1117/12.2502689 ISBN: 978-1-5106-2099-5

## Description

L'invention s'intéresse au domaine des mesures réparties par fibre optique, et plus particulièrement à la reconstruction d'une onde électromagnétique vectorielle rétrodiffusée. L'invention concerne un procédé de reconstruction d'une onde électromagnétique vectorielle rétrodiffusée dans tout ou partie d'une fibre optique. L'invention concerne en outre un dispositif de reconstruction d'une onde électromagnétique vectorielle rétrodiffusée. L'invention concerne également un procédé de mesure optoélectronique utilisant une onde électromagnétique vectorielle rétrodiffusée reconstruite selon l'invention.

### [Art antérieur]

Les capteurs à fibres optiques distribués sont utilisés pour mesurer des influences environnementales telles que la pression, la température, le mouvement mécanique ou encore des vibrations dans diverses applications incluant la surveillance des conditions dans les puits de pétrole, de gaz et autres puits, le contrôle des structures telles que les pipelines, les bâtiments et les ponts, la surveillance acoustique pour la sécurité de périmètre ainsi que l'acquisition sismique. Ces techniques de surveillance utilisent par exemple des mesures réparties par fibre optique.

Le principe de base des mesures réparties par fibre optique consiste à lancer une impulsion de lumière laser dans une extrémité de la fibre optique, puis de collecter la lumière rétrodiffusée revenant de la fibre optique. La lumière rétrodiffusée est collectée et analysée de façon à corréler les caractéristiques de la lumière rétrodiffusée collectée (intensité lumineuse, longueur d'onde, phase...) à un phénomène physique appliqué à la fibre optique et le temps de parcours de la lumière rétrodiffusée collectée à la position du phénomène physique.

Toutefois, dans les systèmes de détection répartie par fibre optique, il existe une atténuation voir un évanouissement du signal (nommé « Fading » en terminologie anglo-saxonne) entrainant une perte d'information et une incapacité d'analyse de la mesure.

Le fading est une conséquence des interférences dues au phénomène ondulatoire des ondes électromagnétiques constituant l'impulsion laser et à l'addition d'ondes électromagnétiques rétrodiffusées de même longueur d'onde et cohérente entre elles (c'est-à-dire présentant une relation de phase constante). Le phénomène de Fading dépend donc de la longueur d'onde (ou fréquence optique), de la phase et de la polarisation. Il en résulte une distribution aléatoire de zones de fort signal (interférences constructives) et de faible signal (interférences destructives) le long de la fibre optique.

La qualité de l'extraction d'une valeur de phase va alors dépendre de l'atténuation voir de l'évanouissement du signal dans la fibre optique. En effet, les zones de faible signal complexifieront l'extraction de la phase et donc l'analyse des influences environnementales. Des techniques basées sur une diversité en fréquence ou en phase ont été développées pour atténuer l'effet de fading et améliorer la qualité de la mesure de phase.

Par exemple, une méthode illustrée dans le document WO2013/066654 basée sur un système OTDR à détection cohérente peut être utilisée pour extraire les informations de phase d'un signal de rétrodiffusion. Cette méthode comprend plusieurs impulsions d'interrogations de fréquences différentes lancées dans la fibre optique et nécessite un système de détection hétérodyne. Or, la mise en oeuvre de plusieurs impulsions d'interrogations de fréquences différentes entraine une complexification du schéma d'interrogation et de détection et elle nécessite au surplus l'application d'un critère de sélectivité.

Une autre méthode divulguée dans le document « Phase-sensitive OTDR system based on digital coherant détection », Pan et al., Asia Communication and Photonics, Vol. 8311,8311 0S, 2011 repose sur le fait de changer en partie la phase d'une impulsion sur deux. La détection hétérodyne n'est pas modifiée par rapport à une détection hétérodyne classique mais les impulsions de phases différentes doivent être traitées indépendamment, ce qui augmente le temps et la difficulté d'analyse du signal rétrodiffusé. En outre, le bruit issu de la source laser devient un facteur de bruit accablant pour mesurer la phase. Ainsi, la source de bruit est trop importante pour mesurer de façon précise et fiable la phase.

Une autre approche exposée dans le document US9009003 consiste à diversifier la détection en polarisation soit dans un schéma à deux polarisations orthogonales soit à trois polarisations à 60° l'une de l'autre. Les différentes polarisations peuvent être traitées indépendamment, et un critère de sélectivité est appliqué, ou combinées. Dans le premier cas, l'information reste toujours partielle. Dans le deuxième cas, l'amplitude totale est retrouvée et l'effet de fading induit par polarisation est supprimé mais l'information de phase est perdue à travers le calcul de l'amplitude.

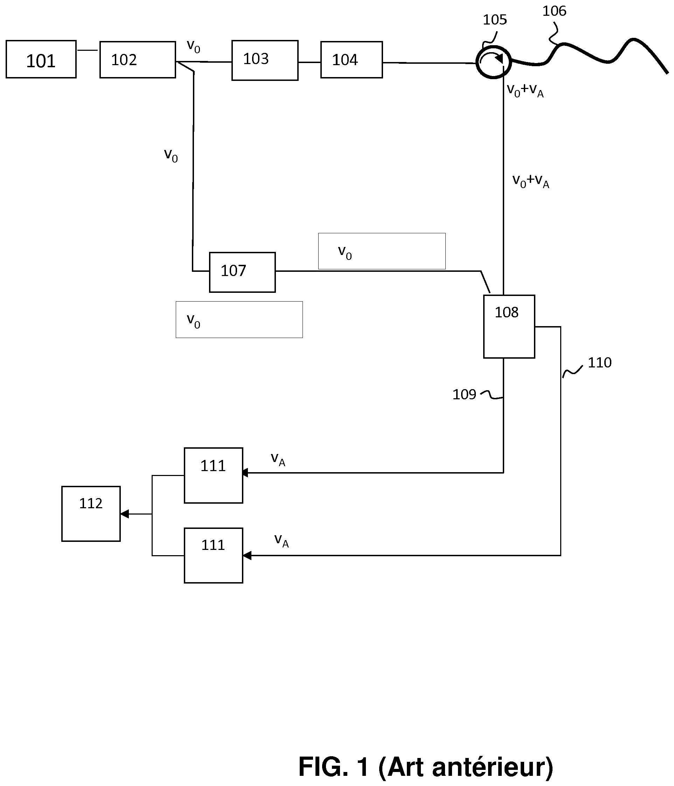

Une autre méthode illustrée dans le document WO2010/045286 consiste en une détection optique hétérodyne résolue en polarisation a été développée telle qu'illustrée à la **Figure 1****.** Pour cela, un signal lumineux issu d'une source lumineuse 101 à une fréquence v₀ est envoyé dans un coupleur optique 102. Le signal lumineux est divisé en deux chemins distincts, vers un oscillateur local 107 de fréquence v₀ et vers une fibre 106 optique à tester. Sur ce chemin, la puissance optique est augmentée et contrôlée à l'aide d'un amplificateur optique 103. Un modulateur acousto-optique 104 permet ensuite de générer un train d'impulsion de durée et de taux de répétition définis. La fréquence optique est ainsi décalée d'une valeur égale à la fréquence hétérodyne choisie. Le train d'impulsions ainsi généré et amplifié est envoyé dans la fibre 106 via un circulateur optique 105. L'onde électromagnétique rétrodiffusée par la fibre à tester 106 de type Rayleigh est récupérée à l'aide du même circulateur optique 105 et guidée vers un coupleur/séparateur de polarisation 108. Elle est mélangée avec l'onde électromagnétique provenant de l'oscillateur local 107 et séparée en deux polarisations orthogonales 109 et 110. Le mélange obtenu contient une composante spectrale à la fréquence hétérodyne dont l'amplitude et la phase dépendent de celles de l'onde rétrodiffusée. Des photodétecteurs 111 convertissent ensuite l'information électromagnétique en information électrique. Le signal électrique ainsi obtenu peut être envoyé directement dans un système de conversion analogique/digitale et d'acquisition 112 pour en extraire l'information d'amplitude et de phase de la composante hétérodyne de manière numérique. Toutefois ceci nécessite d'échantillonner fortement, afin de résoudre suffisamment le signal à la fréquence hétérodyne, ainsi que de disposer d'une puissance de calcul suffisante pour une extraction de phase numérique. En outre, l'utilisation du coupleur pour recombiner le signal de l'oscillateur local et le signal rétrodiffusé implique une perte de moitié du signal et donc une diminution de la qualité de l'extraction. L'utilisation d'un séparateur de polarisation pour une mesure quantitative résolue en polarisation implique que l'oscillateur local est une polarisation linéaire à 45° par rapport aux axes du séparateur de polarisation. Cette polarisation doit être sélectionné et rester stable dans le temps ce qui représente un inconvénient pour la qualité des mesures. Un système analogique d'extraction de l'amplitude et de la phase peut aussi être utilisé entre les photodétecteurs et le système d'acquisition pour éviter une extraction numérique. Bien que basée sur une détection optique hétérodyne résolue en polarisation, la méthode présentée ne permet pas de remonter aux paramètres complets de l'onde à savoir le comportement spatial et temporel du champ électrique de l'onde rétrodiffusée par une fibre optique. Aussi, l'utilisation des informations récoltées par le dispositif n'est pas utilisée pour diminuer ou éliminer l'effet de fading.

Ainsi, il existe un besoin pour de nouvelles méthodes ou dispositifs permettant d'optimiser l'extraction des propriétés d'une onde électromagnétique rétrodiffusée tout en diminuant l'effet de fading, permettant ainsi d'exploiter pleinement l'information de l'onde électromagnétique rétrodiffusée.

### [Problème technique]

L'invention a donc pour but de remédier aux inconvénients de l'art antérieur. En particulier, l'invention a pour but de proposer un procédé de reconstruction d'une onde électromagnétique vectorielle rétrodiffusée, ledit procédé étant simple, et permettant d'accéder à l'onde électromagnétique totale et d'optimiser l'extraction de ses propriétés tout en diminuant l'effet de fading. Le procédé permet en outre d'identifier une variation d'un ou plusieurs paramètres extérieurs agissant sur le comportement de l'onde électromagnétique.

L'invention a en outre pour but de proposer un dispositif de reconstruction d'une onde électromagnétique vectorielle rétrodiffusée dans tout ou partie d'une fibre optique, ledit dispositif permettant de reconstruire pleinement une onde électromagnétique vectorielle rétrodiffusée et d'accéder à l'ensemble des propriétés qui la caractérise, tout en permettant notamment d'atténuer le phénomène de fading.

### [Brève description de l'invention]

A cet effet, **l'invention porte sur** un procédé de reconstruction d'une onde électromagnétique vectorielle rétrodiffusée dans tout ou partie d'une fibre optique, ledit procédé comprenant :
- Une étape d'injection dans la fibre optique d'un signal lumineux de fréquence v₀ ou v₀ + v_{A},
- Une étape de détection optique hétérodyne résolue en polarisation comportant la génération, par un moyen de séparation optique et à partir d'une rétrodiffusion du signal lumineux injecté et d'une onde électromagnétique provenant d'un oscillateur local, d'au moins deux signaux lumineux rétrodiffusés de polarisation orthogonale, produisant un battement de préférence de fréquence v_{A},
- Une étape de conversion, par au moins un, de préférence au moins deux, photo-détecteurs, des signaux lumineux rétrodiffusés de polarisation orthogonale en signaux analogiques initiaux,
- Une étape de détection électrique homodyne, par un démodulateur IQ, permettant une démodulation de type IQ sur chacun des signaux analogiques initiaux, de façon à générer des signaux analogiques démodulés I et Q pour chacun des signaux lumineux rétrodiffusés de polarisation orthogonale, et
- Une étape de reconstruction, par un module de traitement, de l'onde électromagnétique vectorielle rétrodiffusée dans tout ou partie de la fibre optique à partir des signaux analogiques démodulés I et Q générés.

Un tel procédé permet de reconstruire une onde électromagnétique vectorielle rétrodiffusée et ainsi donner un accès complet, simultané et en temps réel aux propriétés qui la caractérisent (amplitude, phase, état et degrés de polarisation, dynamique vectorielle). Les caractéristiques d'une telle onde électromagnétique vectorielle rétrodiffusée peuvent ensuite être analysées pour caractériser au mieux son milieu de propagation à savoir les variations d'indice, de chemin optique, de biréfringence, de dispersion modale de polarisation, et cela de façon répartie dans tout ou partie de la fibre optique. En outre, un tel procédé permet de mitiger le phénomène de fading. Le procédé permet également de faciliter l'analyse des mesures réparties par fibre optique et présente l'avantage d'être peu coûteux. En outre, aucun critère de sélectivité n'est appliqué, l'information de phase est conservée permettant ainsi de l'exploiter.

Ainsi, le procédé permet une reconstruction et une analyse précise sans avoir besoin d'échantillonner fortement ou de disposer d'une forte puissance de calcul.

L'utilisation d'un oscillateur local identique pour la détection optique hétérodyne et d'un signal de référence identique pour la démodulation électrique IQ permet de traiter de manière synchronisée dans le temps, en parallèle et de façon combinée les deux polarisations orthogonales. Leur relation est en tout point préservée.

### Selon d'autres caractéristiques optionnelles du procédé :

- il comprend une étape de déphasage d'une partie des signaux lumineux rétrodiffusés, d'une partie des signaux analogiques initiaux ou d'un signal analogique de référence à la fréquence v_{A}. Ceci permet de réduire le bruit et d'améliorer la qualité des mesures. En outre, ceci permet d'accéder à l'amplitude complexe ou à la phase et à l'amplitude.
- l'étape de détection électrique homodyne comprend une démodulation à la fréquence v_{A} par le démodulateur IQ. La détection électrique homodyne permet une démodulation de type IQ. La démodulation électrique IQ à la fréquence v_{A} permet de réduire le bruit et d'améliorer la qualité des mesures tout en accédant de façon directe à l'amplitude complexe des signaux démodulés et à en faire une acquisition à un taux d'échantillonnage réduit.
- il comprend une étape de calcul d'amplitude complexe à partir des signaux analogiques démodulés I et Q générés.
- l'étape de reconstruction de l'onde électromagnétique vectorielle rétrodiffusée comprend une étape de calcul de phase et/ou d'amplitude dans tout ou partie de la fibre optique et pour tout axe de projection dans tout ou partie de la fibre optique en fonction des valeurs d'amplitudes complexes déterminées à partir des signaux analogiques démodulés I et Q générés. La réalisation de cette sous-étape de calcul donne ensuite la possibilité de rapidement reconstruire l'onde électromagnétique vectorielle rétrodiffusée.
- il comprend une étape de calcul de valeurs de phase et d'amplitude à partir des signaux analogiques démodulés I et Q générés.
- l'étape de reconstruction de l'onde électromagnétique vectorielle rétrodiffusée comprend une étape de calcul d'amplitude complexe dans tout ou partie de la fibre optique et pour tout axe de projection dans tout ou partie de la fibre optique en fonction des valeurs d'amplitude et de phase calculées à partir des signaux analogiques démodulés I et Q générés.
- il comprend le calcul d'une amplitude maximale comprenant l'identification d'un angle optimal associé à l'amplitude maximale pour tout axe de projection dans tout ou partie de la fibre optique, ledit angle optimal correspondant à l'angle présentant l'amplitude maximale la plus élevée parmi des amplitudes d'une pluralité d'angles correspondant aux axes de projection dans tout ou partie de la fibre optique. La réalisation de cette sous-étape de calcul donne ensuite la possibilité de rapidement reconstruire l'onde électromagnétique vectorielle rétrodiffusée. En outre, ceci permet d'accéder à un ou plusieurs paramètres d'intérêt de l'onde électromagnétique vectorielle rétrodiffusée.
- il comprend une étape de détection d'un paramètre d'intérêt, de préférence de l'onde électromagnétique vectorielle rétrodiffusée. Ceci permet de pouvoir caractériser l'onde électromagnétique vectorielle rétrodiffusée. En outre, ceci permet également de pouvoir caractériser les influences environnementales pouvant s'exercer sur la fibre optique.
- l'étape de reconstruction de l'onde électromagnétique vectorielle rétrodiffusée comprend une étape de calcul, en une pluralité de points de tout ou partie de la fibre optique, de l'amplitude du signal pour une pluralité d'angles. Ceci permet d'accéder en une pluralité de points de la fibre optique à l'amplitude maximale du signal, l'amplitude maximale permettant d'accéder à des informations peu ou pas affectée par les phénomènes de fading. Plus largement une telle étape permet d'accéder à l'état de polarisation.
- il comprend une étape d'identification d'un axe principal optique du signal lumineux rétrodiffusé dans tout ou partie de la fibre optique à partir d'un calcul d'amplitude maximale, de préférence de l'amplitude du signal calculé pour une pluralité d'angles. Ceci permet l'accès à l'axe principal optique et donc permet d'atténuer l'effet de fading. En effet, l'axe principal optique du signal lumineux rétrodiffusé dans tout ou partie de la fibre optique correspond aux axes permettant une amplitude maximale du signal pour une pluralité de points de tout ou partie de la fibre optique. En projetant l'amplitude complexe sur l'axe principal, l'effet de fading induit par polarisation est supprimé tout en préservant l'information de phase.
- il comprend une étape de modulation du signal lumineux par un modulateur, avant l'étape d'injection dans la fibre optique, ladite modulation permettant un décalage de la fréquence du signal lumineux d'une valeur égale à v_{A}. Ceci permet de différencier les différents signaux issus de la rétrodiffusion ou de l'oscillateur local.
- il comprend une étape d'amplification intermédiaire du signal électrique issu du modulateur à la fréquence de modulation v_{A}, par exemple par un amplificateur. Ceci permet d'améliorer la sensibilité du résultat.
- il comprend une étape de filtrage analogique, par exemple par au moins un filtre passe bas, permettant de supprimer les fréquences des signaux analogiques supérieures à un seuil prédéterminé. Ceci permet de diminuer le bruit présent autour de la fréquence v_{A}.

**Selon un autre aspect,** l'invention se rapporte à un procédé de mesure optoélectronique dans un système de détection acoustique distribuée comprenant une reconstruction d'une onde électromagnétique vectorielle rétrodiffusée dans tout ou partie d'une fibre optique selon l'invention et une mesure d'une déformation et/ou d'une variation de température dans tout ou partie de la fibre optique en fonction de l'onde électromagnétique vectorielle rétrodiffusée reconstruite. Ceci permet un accès aux informations liées aux influences environnementales de la fibre et cela de façon diverse. En effet, grâce à l'invention, n'importe quelle contrainte, déformation ou variation de température mais également de pression par exemple peut être détectée et analysée.

Selon d'autres caractéristiques optionnelles du procédé, il comprend une mesure d'une déformation et/ou d'une variation de température dans tout ou partie de la fibre optique sur un axe principal optique de préférence reconstruit.

**Selon un autre aspect,** l'invention concerne un dispositif de reconstruction d'une onde électromagnétique vectorielle rétrodiffusée dans tout ou partie d'une fibre optique, ledit dispositif comprenant :
- Une source lumineuse configurée pour générer un signal lumineux de fréquence v₀, apte à être injecté dans la fibre optique,
- Un moyen de séparation optique configuré pour générer au moins deux signaux lumineux rétrodiffusés de polarisation orthogonale, produisant un battement de préférence de fréquence v_{A}, à partir d'une rétrodiffusion du signal lumineux injecté et d'une onde électromagnétique provenant d'un oscillateur local,
- Au moins un, de préférence au moins deux photo-détecteurs, configurés pour convertir les signaux lumineux rétrodiffusés de polarisation orthogonale en signaux analogiques initiaux,
- Un démodulateur IQ agencé pour réaliser une détection électrique homodyne, permettant une démodulation de type IQ sur chacun des signaux analogiques initiaux de façon à générer des signaux analogiques démodulés I et Q pour chacun des signaux lumineux rétrodiffusés de polarisation orthogonale, et
- Un module de traitement configuré pour reconstruire l'onde électromagnétique vectorielle rétrodiffusée dans tout ou partie de la fibre optique à partir des signaux analogiques démodulés I et Q générés.

Un tel dispositif selon l'invention permet de reconstruire pleinement l'onde électromagnétique rétrodiffusée dans une fibre optique lorsqu'une impulsion y est injectée. Le moyen de séparation optique est avantageusement configuré pour réaliser une détection optique hétérodyne résolue en polarisation. Le dispositif permettant la reconstruction d'une onde électromagnétique extrait de façon simultanée l'amplitude complexe ou l'amplitude et la phase pour deux polarisations orthogonales de l'onde électromagnétique rétrodiffusée. L'accès à l'onde électromagnétique vectorielle permet de disposer de toutes ses caractéristiques et donc ouvre des voies d'analyses du signal rétrodiffusé jusqu'alors inaccessibles. En particulier, en reconstruisant l'onde électromagnétique rétrodiffusée, l'effet de fading induit par la polarisation peut-être totalement supprimée et surtout l'information de phase est préservée, permettant ainsi de l'exploiter. Les amplitudes complexes acquises par le dispositif contenant les informations d'amplitude et de phase des deux polarisations orthogonales acquises par le dispositif sont combinées et non traitées séparément pour fournir une information de phase et d'amplitude de l'onde où l'effet de fading induit par polarisation est supprimé. Ainsi, aucun critère de sélectivité n'est imposé, l'atténuation du phénomène de fading repose entièrement sur les propriétés physiques de l'onde électromagnétique guidée dans la fibre optique. En outre, le dispositif présente l'avantage d'être moins complexe que les systèmes utilisant une diversité en fréquence optique pour atténuer l'effet de fading.

D'autres avantages et caractéristiques de l'invention apparaitront à la lecture de la description suivante donnée à titre d'exemple illustratif et non limitatif, en référence aux Figures annexées :
[Fig 1] représente un schéma d'un dispositif selon l'art antérieur d'un système de mesure répartie basé sur la rétrodiffusion Rayleigh utilisant une détection optique hétérodyne résolue en polarisation et une analyse numérique de l'amplitude et de la phase.
[Fig 2] représente un schéma d'un dispositif selon un mode de réalisation de l'invention.
[Fig 3] représente un schéma d'un dispositif selon un mode de réalisation de l'invention.
[Fig 4] représente un schéma d'un dispositif selon un mode de réalisation de l'invention.
[Fig 5] représente un schéma d'un procédé selon un mode de réalisation de l'invention.
[Fig 6] représente un schéma d'un procédé selon un mode de réalisation de l'invention.
[Fig 7] représente un schéma d'un mode de réalisation d'une détection électrique homodyne selon l'invention.
[Fig 8] représente un schéma d'une étape de reconstruction de l'onde électromagnétique vectorielle selon un mode de réalisation de l'invention.
[Fig 9] représente un schéma d'un exemple d'une onde électromagnétique vectorielle rétrodiffusée reconstruite.
[Fig 10] représente la variation de l'angle de l'axe principal de l'onde électromagnétique rétrodiffusée en fonction de la distance de la fibre optique lors de la propagation d'une impulsion dans ladite fibre optique.
[Fig 11] représente un schéma d'un procédé de mesure optoélectronique selon un mode de réalisation de l'invention.
[Fig 12] représente une comparaison d'étapes de calcul de l'amplitude et de la phase en fonction de différents modes de réalisation de l'invention (A, B) en comparaison à l'état de la technique (C).
[Fig 13] représente un schéma illustrant une amélioration de la qualité du signal obtenu lors de l'utilisation de l'axe principale optique selon un procédé de l'invention en comparaison à l'utilisation d'un axe fixe selon l'art antérieur.

Des aspects de la présente invention sont décrits en référence à des organigrammes et / ou à des schémas fonctionnels de procédés, d'appareils (systèmes) selon des modes de réalisation de l'invention.

Sur les figures, les organigrammes et les schémas fonctionnels illustrent l'architecture, la fonctionnalité et le fonctionnement d'implémentations possibles de systèmes, de procédés selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

Par ailleurs, les blocs en pointillés correspondent à des étapes optionnelles.

### [Description de l'invention]

Dans la suite de la description, l'expression **« onde électromagnétique vectorielle rétrodiffusée** » au sens de l'invention correspond à l'onde électromagnétique rétrodiffusée par un matériau dans lequel elle se propage telle qu'une fibre optique définit par le comportement spatial et temporel de son champ électrique (son orientation spatiale, son amplitude et sa phase).

Le terme « **reconstruction** » au sens de l'invention correspond au calcul des caractéristiques d'amplitude et de phase de l'onde électromagnétique vectorielle rétrodiffusée quel que soit l'axe de polarisation et de préférence pour tout axe de polarisation.

On entend par « **dans tout ou partie** » au sens de l'invention, une partie de la fibre optique ou l'ensemble de la fibre optique. Ainsi, dans le cadre de mesures réparties, celle-ci peuvent être réparties tout au long de la fibre optique ou sur une ou plusieurs portions de la fibre optique mais également il peut s'agir de mesure répartie sur une pluralité de points au sein de la fibre optique. De préférence, cela ne concerne pas une mesure ponctuelle.

On entend par « **signal lumineux** » au sens de l'invention une onde électromagnétique de fréquence fixe ou variable, d'intensité fixe ou variable, libre ou guidée. De préférence il s'agit d'un signal guidé dans une fibre optique.

Le terme « **injection** » au sens de l'invention correspond à l'introduction d'un signal lumineux dans une fibre optique par exemple.

Le terme « **rétrodiffusé** » ou « **rétrodiffusion** » au sens de l'invention correspond à la fraction de l'onde incidente qui est retournée dans la direction d'émission de l'onde incidente. Il s'agit d'une diffusion arrière d'une particule, d'une déflexion du rayonnement due à la diffusion par la matière suivant des angles supérieurs à 90° par rapport à leur direction d'émission.

On entend par « **signaux lumineux de polarisation orthogonale** » au sens de l'invention, des signaux lumineux pour lesquels le produit scalaire des deux vecteurs de JONES représentant l'état de polarisation de ces signaux lumineux est égale à zéro, autrement dit des signaux lumineux dont l'état de polarisation représenté respectivement par deux vecteur E1 et E2 sont polarisé orthogonalement si E1*. E2 = 0, où * est l'opérateur de transposée conjuguée.

Le terme « **signal analogique** » au sens de l'invention correspond à un signal présentant une grandeur physique et variant de façon continue. Par exemple, lors de la conversion d'un signal optique en un signal électrique, ledit signal électrique est alors un signal analogique.

On entend par « **signal numérique** » au sens de l'invention notamment un ensemble de grandeurs physiques ou de données représentées au moyen de caractères chiffrés au moyen duquel les informations sont représentées par un nombre fini de valeurs discrètes bien déterminées qu'une de ses caractéristiques peut prendre dans le temps.

On entend par «une partie des signal » une fraction de l'ensemble du signal, par exemple la moitié du signal.

Le terme « **détection homodyne** » au sens de l'invention correspond à une détection permettant d'extraire les caractéristiques telles que l'amplitude et la phase d'un signal oscillant à une certaine fréquence par comparaison avec une oscillation de référence de même fréquence. La comparaison se fait généralement par multiplication avec un oscillateur local présentant une forme identique à la forme du signal oscillant. Le signal est ainsi amené en bande de base (fréquence nulle). En général, homodyne correspondant à une fréquence unique par opposition aux doubles fréquences (détection hétérodyne).

Le terme « **détection hétérodyne** » au sens de l'invention correspond à une détection qui repose sur le mélange du signal lumineux rétrodiffusé avec un signal lumineux de référence par exemple le signal lumineux d'un oscillateur local. La détection hétérodyne permet de décaler en fréquence le spectre fréquentiel composant un signal. La détection hétérodyne permet, par exemple, de ramener un signal à haute fréquence vers une fréquence plus faible. Pour amener un signal a plus faible fréquence, ce signal peut être mélangé à un signal connu d'un oscillateur local, la fréquence obtenue est alors la différence entre oscillateur local et signal étudié.

On entend par « **modulation** » au sens de l'invention l'action de faire varier un signal pour en modifier son amplitude, sa phase, sa fréquence dans le temps

Le terme « **démodulation** » au sens de l'invention correspond à une méthode d'analyse d'un signal initial permettant de séparer un signal d'intérêt de l'oscillation qu'il module. Une démodulation est dite « de type IQ » lorsqu'elle comporte une démodulation en phase et une démodulation en quadrature de phase.

L'expression « **amplitude complexe** » au sens de l'invention correspond à l'amplitude d'un signal telle que composée d'une partie réelle et d'une partie imaginaire.

L'expression « **partie réelle et imaginaire** » au sens de l'invention correspond à chaque partie d'un signal complexe. Il s'agit d'une représentation dans un plan complexe, où la partie réelle est projetée sur l'axe des réels et la partie imaginaire sur l'axe imaginaire, l'argument correspondant alors à la phase et le module à l'amplitude. L'utilisation d'un signal complexe permet de simplifier les calculs.

On entend par « **déphasage** », la différence de phase à l'origine des signaux étudiés. Le déphasage est généralement compris en π et -π et assimilé à un retard de la variation d'un signal par rapport à un autre, à la même fréquence.

L'expression « **multiplié en phase** » au sens de l'invention correspond au mélange du signal issu d'un modulateur avec le signal analogique.

L'expression « **multiplié en quadrature de phase** » au sens de l'invention correspond, en opposition à « multiplié en phase », au mélange du signal issu d'un modulateur avec le signal analogique, le rapport de phase entre les deux étant seulement déphasé de 90° ou pi/2 radian par rapport à la « multiplication en phase ».

L'expression « **seuil prédéterminé** » au sens de l'invention correspond à une valeur déterminée au-dessus ou au-dessous de laquelle les fréquences sont filtrées. Il s'agit d'une valeur limite et correspond généralement à une valeur de fréquence au-delà de laquelle un maximum de bruit est enlevé tout en préservant le signal d'intérêt.

On entend par « **contrainte** » au sens de l'invention une force appliquée sur un matériau ou un corps. Cette force peut être exercée par une torsion, une traction, une poussée ou toute autre force entrainant une « **déformation** » ou un déplacement du matériau ou du corps sur lequel elle s'exerce.

Le terme « **déformation** » au sens de l'invention correspond à un changement de forme ou de dimension d'un matériau ou d'un corps sans dépasser la limite de rupture du matériau ou du corps en question. Par exemple, une déformation au sens de l'invention tend à étirer ou comprimer un matériau ou un corps subissant une force et notamment sous forme d'une contrainte.

L'expression « **axe principal optique** » au sens de l'invention correspond à l'axe optique sur lequel l'amplitude de la projection de l'onde électromagnétique est maximale à l'intérieur d'une fibre optique. L'axe principal est celui sur lequel le signal présente une amplitude maximale, c'est-à-dire supérieure à l'ensemble des autres amplitudes du signal sur une même tranche de fibre optique. C'est l'axe principal de l'ellipse formé par le champ électrique de l'onde électromagnétique à une position donnée de la fibre, l'ellipse définissant l'état de polarisation de l'onde électromagnétique. Ainsi, au sens de l'invention, l'axe principal optique varie tout au long de la fibre optique pour toujours correspondre à l'axe sur lequel le signal, en ce point de la fibre optique, présentera une amplitude maximale.

L'expression « **axe de projection** » au sens de l'invention correspond à l'axe sur lequel le champ électrique va osciller, c'est-à-dire, où il est possible d'observer le champ électrique osciller.

On entend par **« état de polarisation** » au sens de l'invention, la forme définie par le mouvement de l'orientation du champ électrique dans le plan de section perpendiculaire à la propagation de l'onde électromagnétique. L'état de polarisation peut-être alors rectiligne, ellipsoïdal ou circulaire.

On entend par « **détection d'un paramètre** » ou par « **paramètres d'intérêt** » au sens de l'invention, une ou plusieurs caractéristiques de l'onde électromagnétique vectorielle rétrodiffusée telles que amplitude, phase, état et degrés de polarisation, dynamique vectorielle, variations d'indice, de chemin optique, de biréfringence, de dispersion modale de polarisation.

On entend par « **couplé** » au sens de l'invention, mélanger par exemple additionner ou multiplier deux signaux entre eux.

Dans la suite de la description, les mêmes références sont utilisées pour désigner les mêmes éléments.

Divers effets optiques sont connus lors d'une mesure par fibre optique notamment la rétrodiffusion Brillouin, Raman et Rayleigh, et chacune de ces techniques présente des caractéristiques différentes permettant de déterminer différentes influences environnementales, à différentes échelles de temps. Les paramètres environnementaux de la fibre optique mesurables en utilisant une technique de mesure repartie par fibre optique basée sur la rétrodiffusion sont reliés aux comportements de l'onde électromagnétique vectorielle rétrodiffusée. Par ailleurs, les paramètres environnementaux de la fibre optique actuellement mesurables en utilisant une technique de mesure répartie par fibre optique basée sur la rétrodiffusion Rayleigh sont directement et linéairement reliés à la phase de l'onde électromagnétique rétrodiffusée. Ainsi, pour déterminer quantitativement une influence environnementale basée sur la rétrodiffusion de Rayleigh, la qualité de la mesure dépend directement de la capacité à extraire correctement la phase de l'onde électromagnétique rétrodiffusée.

Actuellement, l'étude d'influences environnementales par mesure répartie par fibre optique est limitée par le phénomène de fading. Le phénomène de fading complexifie l'extraction de la phase, donc la qualité des mesures et par extension l'étude d'influences environnementales.

Les inventeurs ont donc développé un procédé et un dispositif permettant de reconstruire une onde électromagnétique vectorielle ; la reconstruction de l'onde électromagnétique vectorielle rétrodiffusée permettant de supprimer l'effet de Fading induit par la polarisation.

L'invention va être décrite dans le cadre d'une rétrodiffusion de type Rayleigh dans une fibre optique, toutefois, elle ne se limite pas à une fibre optique et peut être mise en oeuvre par tout moyen apte à guider une onde lumineuse.

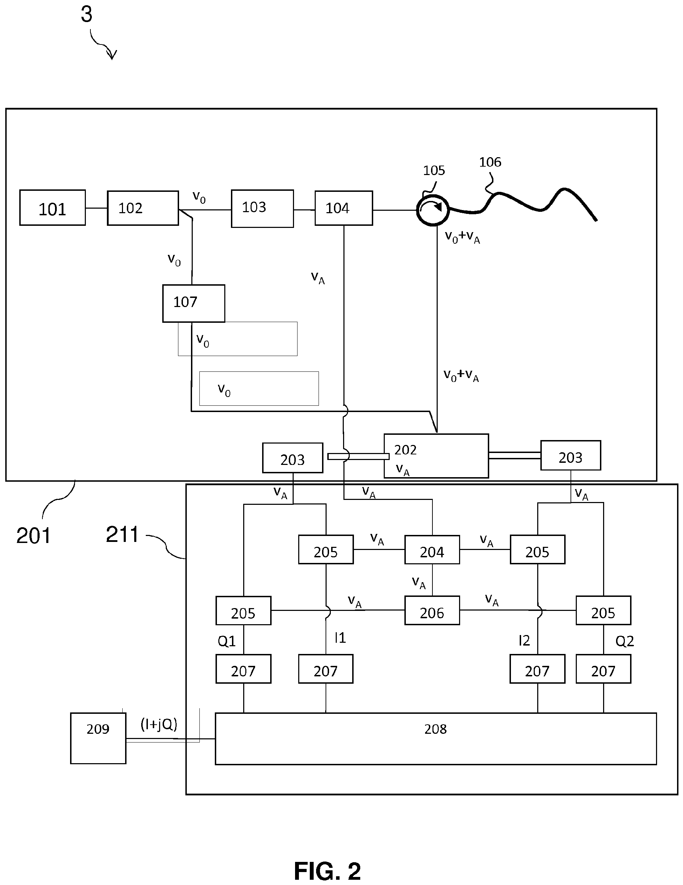

La Figure 2 schématise **un dispositif 3 de reconstruction** d'une onde électromagnétique vectorielle rétrodiffusée dans tout ou partie d'une fibre optique 106.

En particulier, l'onde électromagnétique vectorielle rétrodiffusée peut être reconstruite à partir d'un signal lumineux rétrodiffusé dans une fibre optique 106.

En outre, le signal lumineux rétrodiffusée peut correspondre de préférence à un signal de rétrodiffusion de type Rayleigh.

Une fibre optique 106 selon l'invention peut correspondre à tout type de fibre optique configurée pour propager et guider un signal lumineux. De préférence une fibre optique selon l'invention est une fibre optique de télécommunication en silice. Avantageusement, une fibre optique en silice diminue les pertes lors de la propagation de l'onde lumineuse dans la fibre optique. Optionnellement, une fibre 106 optique peut correspondre à une fibre modifiée pour augmenter le processus de rétrodiffusion. Par exemple les fibres « enhanced » peuvent être utilisées. Ces fibres présentent la particularité d'une rétrodiffusion augmentée par augmentation des impuretés dans la fibre ou par l'inscription de réseaux de Bragg en leur sein afin d'augmenter la réflexion de la lumière.

Un dispositif 3 de reconstruction selon l'invention peut comprendre **une source 101 lumineuse.** La source lumineuse 101 est configurée pour générer un signal lumineux. Le signal lumineux présente par exemple une fréquence v₀. Le signal lumineux est apte à être injecté dans la fibre optique 106.

Une source 101 lumineuse peut être une source optique continue à une seule impulsion optique ou discontinue comprenant plusieurs impulsions optiques (également nommé « pulse » en terminologie anglo-saxonne). De préférence la source lumineuse est continue.

Une source 101 lumineuse selon l'invention peut être une source à bande étroite telle qu'un laser à fibre à rétroaction répartie (qui fournit généralement le spectre de lasers disponible le plus étroit possible pour lequel la longueur d'onde d'émission peut être sélectionnée sur une large plage), un laser DFB (pour « Distributed FeedBack » en terminologie anglo-saxonne) utilisant un réseau de Bragg, ou un laser à cavité externe (ECL pour External Cavity Laser en terminologie anglo-saxone). La longueur d'onde d'émission λ₀ est de préférence égale ou sensiblement égale à 1550 nm, à la fréquence correspondante v₀. La raie de l'onde lumineuse émise est centrée sur la longueur d'onde d'émission λ₀ et possède une importante longueur de cohérence.

La source 101 lumineuse, par exemple un laser, émet un signal lumineux moyennement puissant, typiquement de l'ordre de 20 mW, dans une fibre optique 106.

La source lumineuse 101 émet un signal lumineux possédant un état de polarisation linéaire.

Optionnellement, un dispositif permettant de rendre l'état de polarisation linéaire peut être utilisé.

Un dispositif 3 de reconstruction selon l'invention peut comprendre **un coupleur optique 102,** de préférence un coupleur optique 102 à maintien de polarisation. Un coupleur 102 à maintien de polarisation est configuré pour diviser en deux signaux de fréquence identique répartis dans deux bras le signal lumineux issu de la source 101 lumineuse. Le premier bras oriente une partie du signal lumineux à la fréquence v₀ vers un oscillateur local 107. L'oscillateur local est composé d'une fibre à maintien de polarisation. Le deuxième bras oriente l'autre partie du signal lumineux à la fréquence v₀ vers la fibre optique 106 tout en préservant l'état de polarisation initial issu de la source lumineuse 101.

Avantageusement, l'utilisation d'un coupleur à maintien de polarisation 102 et d'une fibre à maintien de polarisation sur l'oscillateur local permet de maintenir la polarisation sortante de la source lumineuse. La stabilité en polarisation de l'oscillateur local est améliorée. Celui-ci servant de référence, notamment lors de la séparation en polarisation, sa stabilité est cruciale pour la qualité du signal.

Un coupleur 102 peut correspondre à un connecteur, miroir, lentille, assemblage de fibres optique (par exemple basé sur la fusion d'une section de deux fibres optiques) permettant d'orienter le signal lumineux dans une direction souhaitée. Il peut s'agir de tout moyen de préférence optique configuré pour diviser et diriger le signal lumineux tout en préservant son état de polarisation.

Un dispositif 3 de reconstruction selon l'invention peut comprendre **un amplificateur optique 103.** L'amplificateur est configuré pour amplifier le signal. Il est en particulier configuré pour augmenter et contrôler la puissance du signal.

Un dispositif 3 de reconstruction selon l'invention peut comprendre **un modulateur optique 104.** Le modulateur est de préférence un modulateur acousto-optique. De préférence, le modulateur optique peut être agencé en aval de l'amplificateur optique. Le modulateur est configuré pour générer un train d'impulsions de durée et de taux de répétition prédéterminés. De multiples impulsions optiques peuvent être transmises dans la fibre optique 106, les multiples impulsions optiques pouvant être envoyées simultanément ou à des moments différents. Les multiples impulsions optiques peuvent avoir différentes fréquences, polarisations et durées.

La fréquence v₀ est décalée par rapport au signal lumineux issu de la source lumineuse 101 d'une valeur égale à, ou un multiple entier de, la valeur de fréquence prédéterminée du modulateur. De plus, la fréquence v₀ peut également être décalée par rapport au signal lumineux issu de la source lumineuse 101 d'une valeur égale à - v_{A}. De préférence, la valeur de fréquence du modulateur 104 correspond à une valeur de fréquence égale à v_{A}. Ainsi, comme le montre la figure 2, une fréquence v_{A} est fournie suite à un signal de commande pour le modulateur 104. L'impulsion peut être déclenchée par une sous unité de contrôle d'une impulsion de déclenchement. L'impulsion optique ainsi extraite du modulateur 104 est ainsi également décalée en fréquence par rapport à l'entrée du signal lumineux dans le modulateur 104 depuis la source lumineuse 101, et également par rapport au signal de l'oscillateur local dans le premier bras.

Le modulateur 104 est de préférence apte à imposer un décalage de fréquence d'au moins 10 Mhz au signal continu et à le transformer en un signal impulsionnel destiné à être injecté dans une fibre optique. Le signal provenant du modulateur comporte une composante continue de fréquence v₀, transformée en une composante impulsionnelle de fréquence v₀ + v_{A}. Le modulateur 104 est apte à générer un signal impulsionnel présentant une fréquence décalée par rapport à la fréquence du signal lumineux continu. Le décalage de fréquence v_{A} appliqué à ladite fréquence décalée peut être supérieur ou égal à 10 MHz. La fréquence v_{A} est la fréquence propre au modulateur et est généralement supérieure ou égale à 10 MHz et inférieure ou égale à 1 GHz, de préférence sensiblement égale à 200 MHz. La largeur temporelle de l'impulsion ainsi générée peut par exemple être comprise entre 10 ns et 500 ns, de préférence elle est sensiblement égale à 20 ns.

En variante, le décalage de fréquence peut être mis en oeuvre dans le trajet de l'oscillateur local 107.

D'autres mécanismes de création d'impulsion et de décalage de fréquence peuvent être utilisés, tels que des modulateurs électro-optiques ou une combinaison de modulateurs électro-optiques et de modulateurs électro-acoustiques. Le décalage de fréquence, bien que non strictement nécessaire, est pratique en ce qu'il permet également aux signaux résultant de la combinaison des signaux réfléchis et de l'oscillateur local de se distinguer de la lumière provenant uniquement du trajet de l'oscillateur local ou du signal rétrodiffusé.

Cela permet également de mesurer la phase optique relative de divers signaux de manière appropriée dans le domaine électrique.

Optionnellement, un déclencheur peut être mis en oeuvre pour déterminer le moment auquel l'impulsion suivante doit être générée par le modulateur 104. Le modulateur optique 104 permet ainsi de diminuer les effets d'interférences intra-impulsion et donc le bruit. Cette caractéristique est particulièrement avantageuse lorsqu'un suivi de la rétrodiffusion Rayleigh est souhaité.

Avantageusement, en sortie du modulateur 104, le signal lumineux, de préférence de fréquence v₀+ v_{A} est dirigé vers un circulateur.

De préférence, un signal électrique de fréquence v_{A} est également injecté, de préférence de façon continue, dans le modulateur, et orienté vers un amplificateur 204. Ce signal permet de servir de référence à la fréquence v_{A}.

Un dispositif 3 de reconstruction selon l'invention peut comprendre **un circulateur 105 optique.** De préférence, le circulateur optique 105 est agencé en aval du modulateur 104. Le circulateur 105 optique est configuré pour réceptionner le signal lumineux, par exemple issu du coupleur 102, du modulateur 104 ou de l'amplificateur 103, de préférence à une fréquence égale à v₀+v_{A}. De plus, le circulateur 105 optique est configuré pour injecter le signal lumineux dans la fibre 106 optique. Enfin, le circulateur 105 optique est configuré pour collecter la rétrodiffusion, de préférence de Rayleigh, issu de la fibre 106 optique. En effet, le signal à une fréquence v₀ ou v₀+v_{A} est injecté dans la fibre optique, qui génère en sens inverse, un signal de rétrodiffusion (e.g. Rayleigh) en réponse à l'impulsion. Le signal de rétrodiffusion Rayleigh présente une fréquence v₀ ou v₀+v_{A}. Le signal de rétrodiffusion est séparé de la lumière allant vers l'avant pour être dirigé vers un moyen de séparation optique 202,303.

Ainsi, un dispositif 3 de reconstruction selon l'invention comprend un **moyen de couplage/séparation optique** 202. Le moyen de couplage/séparation optique 202 est de préférence configuré pour coupler l'onde électromagnétique issue de l'oscillateur local 107 à une fréquence v₀+v_{A} ou v₀ avec le signal de rétrodiffusion Rayleigh issu de la fibre optique à une fréquence v₀ ou v₀+v_{A}. Le moyen de couplage/séparation optique 202 est également configuré pour générer au moins deux signaux lumineux rétrodiffusés de polarisations orthogonales à partir d'une rétrodiffusion du signal lumineux injecté. Lesdits au moins deux signaux lumineux rétrodiffusés de polarisation orthogonales présentent par exemple une fréquence à v₀+v_{A}, de préférence un battement de à une fréquence v_{A}.

Les fréquences issues de l'oscillateur local 107 et du signal de rétrodiffusion Rayleigh étant différentes, un dispositif 3 de reconstruction selon l'invention comprend une détection optique hétérodyne résolue en polarisation 201.

Un moyen de couplage/séparation optique 202 peut correspondre à un coupleur séparateur, un coupleur séparateur de polarisation, à un hybrideur 90 °, à un hybrideur 180°. De préférence, dans ce mode de réalisation, le moyen de couplage/séparation optique peut correspondre à un hybrideur 180 °. La polarisation de l'oscillateur local est maintenue et fixée à 45° par rapport aux axes du séparateur de polarisation permettant de résoudre en polarisation de manière quantitative.

Dans un autre mode de réalisation, le signal optique de rétrodiffusion est tout d'abord combiné avec le signal lumineux issu de l'oscillateur local 107 pour former un signal combiné. Un séparateur de faisceau de polarisation dans le moyen de séparation optique divise ensuite le signal combiné en au moins deux parties de signal qui ont des polarisations différentes (par exemple, des polarisations orthogonales).

Avantageusement, ce moyen de séparation optique permet d'atténuer les évanouissements de polarisation (c'est-à-dire l'affaiblissement du signal lorsque les polarisations du signal de rétrodiffusion et du signal de l'oscillateur local ne sont pas identiques).

Plus important encore, dans certains cas, les deux polarisations peuvent porter des informations différentes. Ceci est particulièrement le cas lorsque des influences asymétriques sont appliquées à la fibre, telle qu'une force latérale, qui tend à agir pour faire varier la différence de vitesse de propagation entre les deux modes de polarisation de la fibre (c'est-à-dire qu'elle modifie la biréfringence de la fibre).

Le moyen de séparation optique est de préférence alors configuré pour orienter une première partie de signal correspondant à une première polarisation vers un premier photodétecteur 203, et une deuxième partie de signal correspondant à une deuxième polarisation différente est fournie à un deuxième photodétecteur 203.

Ainsi, un dispositif 3 de reconstruction selon l'invention comprend **au moins un photo-détecteur** 203, de préférence au moins deux **photo-détecteurs** 203. Ledit ou lesdits photo-détecteurs sont configuré pour convertir les signaux lumineux rétrodiffusés de polarisations orthogonales en signaux analogiques initiaux. Un signal analogique initial issu du photodétecteur présente de préférence une fréquence v_{A}.

Un photodétecteur 203 peut correspondre à un photo-détecteur balancé, photodiodes, photodiodes à avalanche.

De préférence, l'utilisation d'un hybrideur 180° avec des photodétecteurs balancés permet de supprimer les pertes liées au coupleur séparateur.

Avantageusement, chaque signal analogique initial issu desdits au moins deux signaux lumineux rétrodiffusés de polarisation orthogonale est un signal électrique orienté vers un démodulateur électrique IQ.

Ainsi, un dispositif 3 de reconstruction selon l'invention comprend **un démodulateur IQ** 211,302. Le démodulateur IQ est agencé pour réaliser une détection électrique homodyne sur chacun des signaux analogiques initiaux. Il peut par exemple être configuré pour réaliser une détection électrique homodyne à la fréquence v_{A} en mélangeant les signaux analogiques initiaux détecté pour chacune des polarisations à des signaux analogiques de référence ayant une fréquence v_{A}.

En particulier, il permet de générer des signaux analogiques démodulés I et Q pour chacun des signaux lumineux rétrodiffusés de polarisation orthogonale.

De préférence, il permet de générer des signaux analogiques démodulés I (I₁,I₂) et Q (Q₁,Q₂) pour chacun des signaux analogiques initiaux. Avantageusement, un démodulateur IQ peut être configuré pour réaliser un déphasage d'une partie des signaux lumineux rétrodiffusés, d'une partie des signaux analogiques initiaux ou d'un signal analogique de référence à la fréquence v_{A}.

De façon plus préférée et comme cela sera détaillé par la suite, un démodulateur IQ selon l'invention est agencé de façon réaliser une multiplication en phase et une multiplication en quadrature de phase de signaux analogiques provenant de chacun des signaux lumineux rétrodiffusés de polarisation orthogonale avec un signal de référence. Ainsi, comme cela sera détaillé par la suite, une partie des signaux lumineux rétrodiffusés, une partie des signaux analogiques initiaux ou le signal analogique de référence à la fréquence v_{A} peuvent traverser un déphaseur.

Le démodulateur IQ peut comprendre au moins **un mélangeur électrique** 205. De préférence, le démodulateur IQ comprend deux mélangeurs électriques 205 pour chaque signal analogique initiaux. Ainsi, dans un mode de réalisation, un signal analogique initial issu d'un des au moins deux signaux lumineux rétrodiffusés de polarisation orthogonale est orienté vers un sixième bras comprenant un mélangeur électrique 205 et vers un septième bras comprenant également un mélangeur électrique 205.

Le signal analogique initial issu d'un des au moins deux signaux lumineux rétrodiffusés de polarisation orthogonale peut être mélangé, par un mélangeur électrique 205, avec un signal analogique de référence. De préférence, le signal analogique de référence provient du modulateur 104 à une fréquence v_{A}. Optionnellement, le signal de référence peut être généré à partir d'une source extérieure.

Néanmoins, avant d'être mélangé avec un signal analogique initial, un signal analogique de référence pourra traverser plusieurs composants configurés pour en modifier les propriétés.

Par exemple, un signal analogique de référence peut être préalablement dirigé vers **un amplificateur intermédiaire 204.** L'amplificateur intermédiaire 204 est de préférence ajustable. En outre, l'amplificateur intermédiaire permet d'amplifier le résultat du signal et d'augmenter la sensibilité.

En outre, un signal analogique de référence, issu de l'amplificateur intermédiaire 204 ou directement du modulateur, peut également être dirigé vers un déphaseur 206 tel qu'illustré à la **figure 2****.**

Ainsi, le démodulateur IQ peut comprendre **un déphaseur 206.** Le déphaseur est configuré pour déphaser le signal incident. Un déphaseur 206 peut correspondre à un déphaseur 90 ° c'est à dire déphasant le signal incident de 90°.

Comme illustré à la figure 2, le déphaseur 206 déphase le signal analogique de référence de 90 ° avant qu'il ne soit dirigé vers un mélangeur 205 agencé pour le mélanger avec un signal analogique initial. Le signal analogique initial issu d'un des au moins deux signaux lumineux rétrodiffusés de polarisation orthogonale peut alors être mélangé avec un signal analogique de référence déphasé issu du déphaseur 206 par le mélangeur électrique 205 tel qu'illustré à la figure 2.

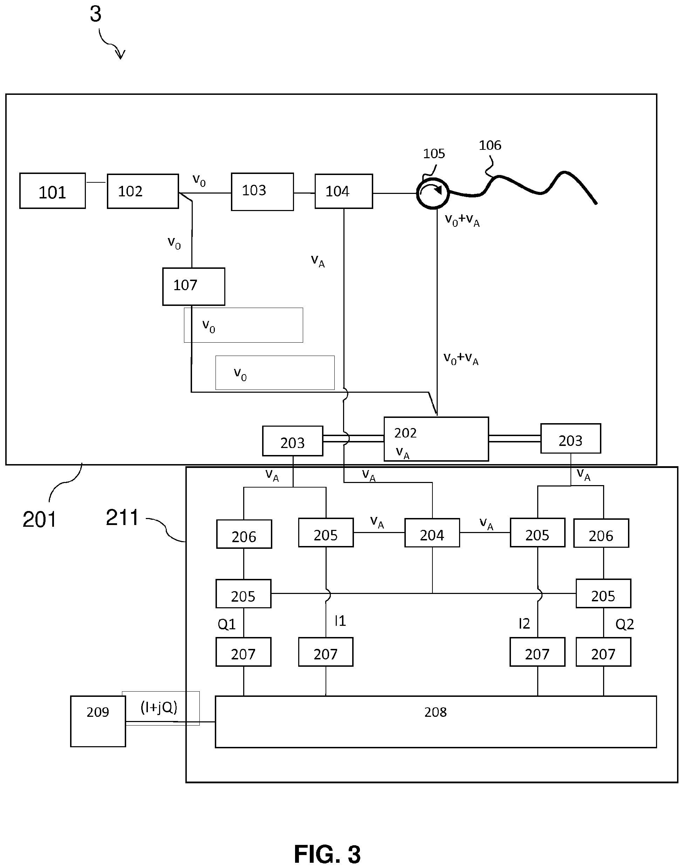

Selon un mode de réalisation particulier de la présente invention illustré à la **figure 3****,** le démodulateur IQ peut comporter au moins un déphaseur 206 configuré pour déphaser de 90 ° un signal analogique initial avant qu'il soit dirigé vers un mélangeur 205 agencé pour le mélanger avec un signal analogique de référence.

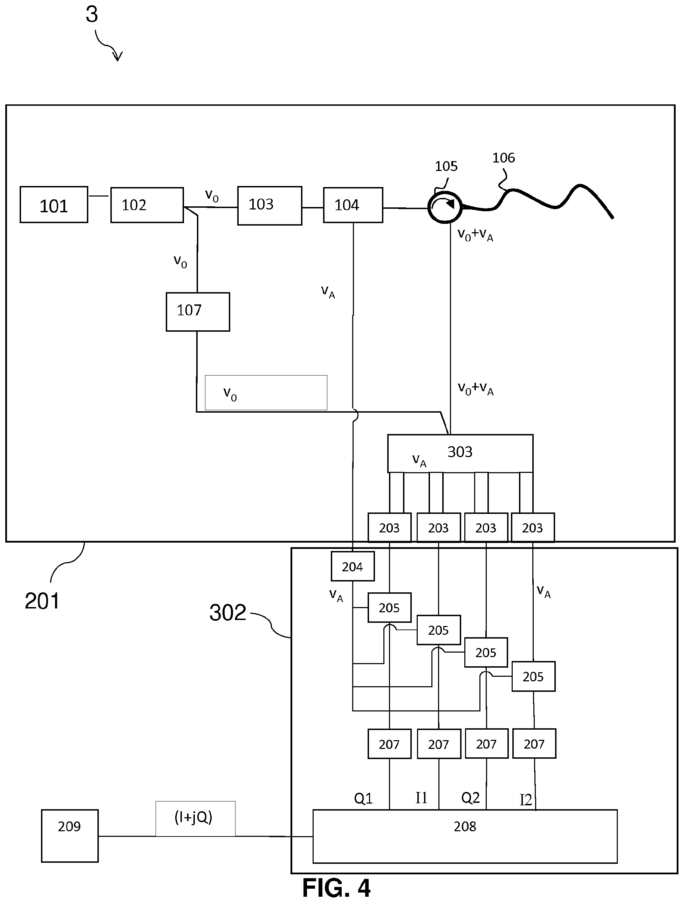

Un autre mode de réalisation d'un dispositif 3 de reconstruction est illustré à la **figure 4****.** Dans ce mode de réalisation, un moyen de séparation optique 303 est de préférence un hybrideur 90°. Un tel hybrideur est en outre configuré pour générer directement et de manière optique, le signal en phase I et en quadrature de phase Q entre l'oscillateur local et le signal de chaque polarisation orthogonale. L'utilisation d'un hybrideur 90° avec des photodétecteurs balancés permet de supprimer les pertes liées au couleur séparateur.

Dans ce mode de réalisation, une première partie de signal ayant une première polarisation est fournie à un premier détecteur 203 et à un deuxième détecteur en quadrature de phase par rapport à ce dernier. La deuxième partie de signal ayant une deuxième polarisation différente est fournie à un troisième détecteur 203 et à un quatrième détecteur en quadrature de phase par rapport à ce dernier.

Par ailleurs, dans ce mode de réalisation un déphaseur électrique 206 n'est pas nécessaire. Les signaux analogiques en phase et en quadrature de phase issus des détecteurs 203 sont chacun directement mélangés avec le signal issu du modulateur 104. Le signal issu du modulateur 104 peut également être amplifié à l'aide d'un amplificateur intermédiaire 204.

Ainsi, les mélangeurs électriques 205 fonctionnant à la fréquence hétérodyne mélangent les signaux analogiques initiaux détectés pour chacune des polarisations à des signaux analogiques de référence, en phase ou en quadrature de phase (i.e. obtenus à l'aide d'un déphaseur 206). Alternativement comme décrit ci-dessus, les mélangeurs électriques 205 fonctionnant à la fréquence hétérodyne mélangent les signaux analogiques initiaux en phase ou en quadrature de phase pour chacune des polarisations (i.e. obtenus à l'aide d'un déphaseur 206 ou directement grâce à un hybrideur tel qu'illustré à la figure 4 à un signal analogique de référence. Le signal d'intérêt de préférence à la fréquence hétérodyne v_{A} est ainsi ramené en bande de base en phase I et en quadrature de phase Q par rapport à l'oscillateur local pour chacune des polarisations détectées.

Le démodulateur IQ peut également comprendre au moins **un filtre 207.** De préférence le démodulateur IQ comprend un filtre 207 pour chaque signal en phase et en quadrature de phase. Un filtre 207 peut être utilisé pour sélectionner une bande de fréquences au-dessus de la fréquence nulle.

Un filtre est configuré pour filtrer le signal d'intérêt à la fréquence hétérodyne ramené en bande de base.

Un filtre selon l'invention peut correspondre à un filtre passe-bas, un filtre passe-bande ou un filtre passe-haut. De préférence, il s'agit de filtre passe-bas.

Les filtres, de préférence passe-bas, permettent d'obtenir l'enveloppe complexe du signal correspondant à l'onde électromagnétique vectorielle rétrodiffusée pour chacune des deux polarisations orthogonales.

Contrairement à un montage hétérodyne classique, le signal d'intérêt n'est pas traité autour d'une fréquence porteuse. Ainsi, l'obtention de l'enveloppe du signal permet un retraitement numérique accéléré.

Ainsi, comme cela a été décrit, le démodulateur IQ peut comprendre **un système d'acquisition** 208. Le système d'acquisition 208 est configuré pour convertir le ou les signaux analogiques en un signal numérique.

Le système d'acquisition est configuré pour recevoir les signaux en phase et en quadrature de phase portant l'information d'amplitude et de phase pour chacune des deux polarisations orthogonales.

Optionnellement, une synchronisation peut-être réalisée pour déclencher les cartes d'acquisition à chaque impulsion lumineuse généré par le modulateur et injectée dans la fibre optique. Le système d'acquisition peut également être configuré pour échantillonner les signaux entrant afin d'acquérir les informations de phase à partir de ceux-ci.

Le démodulateur IQ permet une détection électrique homodyne permettant une démodulation de type IQ sur chacun des signaux analogiques initiaux, pour générer des signaux analogiques démodulées I (I₁,I₂) et Q (Q₁,Q₂) pour chacun des signaux lumineux rétrodiffusés de polarisation orthogonale, de préférence des signaux analogiques initiaux correspondant aux deux polarisations orthogonales.

Ces signaux analogiques démodulés I (I₁,I₂) et Q (Q₁,Q₂) peuvent être utilisé pour calculer un signal complexe (l+jQ) qui comportera toutes les informations nécessaires à la reconstruction du signal réel. En effet, le démodulateur IQ étant configuré pour réaliser une multiplication en phase et en quadrature de phase, le signal est divisé en deux composantes orthogonales liées par une relation trigonométrique. Une partie du signal en phase est cosinusoïde, alors que l'autre partie du signal en quadrature de phase est sinusoïde. Ainsi ces deux parties d'un même signal deviennent indépendantes l'une de l'autre de telle sorte que le signal en phase correspond à la partie réelle du signal complexe et le signal en quadrature de phase correspond à la partie imaginaire du signal complexe. Ainsi, le système d'acquisition permet de déterminer l'amplitude complexe (l+jQ) pour chacune des deux polarisations orthogonales. Ceci permet de calculer la phase et l'amplitude du signal rétrodiffusé de façon plus fiable et ainsi limiter l'atténuation ou l'évanouissement du signal.

Comme nous le verrons dans les exemples de traitement, contrairement à un système reposant sur la démodulation IQ homodyne purement optique, les bruits basse fréquence sont majoritairement filtrés en utilisant une fréquence porteuse et la détection électrique.

En outre, l'acquisition en parallèle sur les deux polarisations orthogonales de l'amplitude complexe (l+jQ) par la démodulation IQ permet la reconstruction de l'onde électromagnétique vectorielle rétrodiffusée d'une impulsion se propageant dans tout ou partie de la fibre optique.

Par ailleurs, les signaux analogiques démodulés I (I₁,I₂) et Q (Q₁,Q₂) peuvent être utilisés pour calculer des valeurs de phase et d'amplitude ce qui permettra d'accéder à toutes les informations nécessaires à la reconstruction du signal réel.

Pour cela, un dispositif 3 de reconstruction selon l'invention peut comprendre **un module de traitement** 209. Le module de traitement est configuré pour reconstruire l'onde électromagnétique vectorielle rétrodiffusée dans tout ou partie de la fibre optique 106 en fonction des valeurs d'amplitude complexe (l+jQ) déterminées, ou des valeurs de phase et d'amplitude En effet, une relation mathématique, permet de déterminer l'onde électromagnétique vectorielle rétrodiffusée en fonction de valeurs d'amplitude complexe (l+jQ) déterminées à partir des signaux analogiques démodulés I (I₁,I₂) et Q (Q₁,Q₂) générés. Une relation mathématique permet également de calculer les valeurs d'amplitudes complexes à partir des valeurs de phase et d'amplitude.

Le module de traitement est avantageusement configuré pour identifier sur toute ou partie de la longueur de la fibre optique des axes optiques correspondant aux amplitudes maximales détectées. Les amplitudes maximales peuvent être déterminées par calcul mathématique à partir des valeurs d'amplitudes complexes (l+jQ) déterminées. De même, les valeurs de phase peuvent être calculées à partir des valeurs d'amplitudes complexes (l+jQ) déterminées. L'effet de fading induit par la polarisation est totalement supprimé et surtout l'information de phase est préservée, permettant ainsi de l'exploiter. Ainsi, le module de traitement 209 est apte à reconstruire l'onde électromagnétique vectorielle rétrodiffusée et donc par exemple de calculer un axe principal optique sur une partie ou tout au long de la fibre optique.

Accéder à l'onde électromagnétique totale permet d'optimiser l'extraction de ses propriétés.

Les amplitudes complexes contenant les informations d'amplitude et de phase des deux polarisations orthogonales acquises par le système sont combinées et non traitées séparément pour ne fournir et exploiter qu'une seule amplitude complexe d'intérêt en fonction de la position de l'impulsion lumineuse dans la fibre.

Le dispositif 3 de reconstruction permet de bénéficier des avantages et particulièrement de la précision d'une démodulation numérique tout en évitant d'échantillonner avec une résolution suffisante la fréquence et de disposer d'une puissance de calcul suffisante pour une extraction de phase numérique.

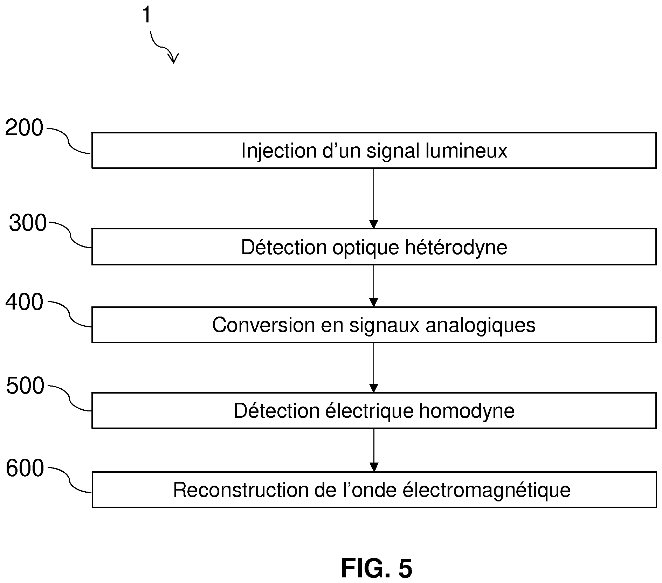

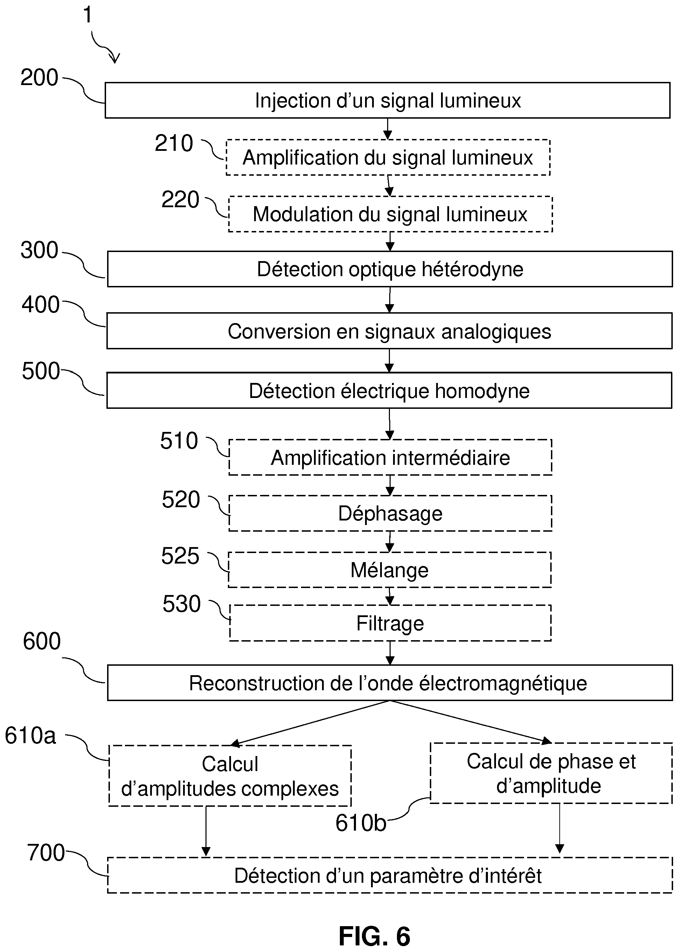

**Selon un autre aspect,** l'invention concerne **un procédé 1 de reconstruction** d'une onde électromagnétique vectorielle rétrodiffusée dans tout ou partie d'une fibre optique 106 tel qu'illustré aux **figures 5** **et** **6****.**

Un procédé 1 de reconstruction selon l'invention comprend **une étape 200** d'injection dans la fibre optique 106 d'un signal lumineux, de préférence de fréquence v₀+v_{A}. La fréquence v₀+v_{A} est de préférence obtenue par un décalage en fréquence d'un signal lumineux de fréquence v₀. Le décalage en fréquence peut être réalisé par un modulateur 104. En outre, le signal lumineux de fréquence v₀ peut être généré par une source lumineuse 101.

Alternativement, le procédé peut comporter une étape 200 d'injection dans la fibre optique 106 d'un signal lumineux de fréquence v₀. Dans ce cas, c'est le signal lumineux qui est orientée vers un oscillateur local 107 qui présente une fréquence v₀+v_{A}.

Ainsi, le procédé peut comprendre une étape de séparation du signal lumineux issu de la source lumineuse. L'étape de séparation peut être réalisée par un coupleur optique à maintien de polarisation 102. Le signal lumineux est divisé en deux parties de fréquence identique v₀. Le signal est orienté vers deux chemins distincts. Une partie du signal lumineux est orientée vers un amplificateur 103 et l'autre partie du signal lumineux est orientée vers un oscillateur local 107.

Un procédé selon l'invention peut comprendre **une étape 210 d'amplification** du signal lumineux. Cette étape est mise en oeuvre par un amplificateur 103. L'étape d'amplification augmente et contrôle la puissance optique du signal lumineux avant l'injection du signal lumineux dans la fibre optique 106.

Un procédé 1 de reconstruction selon l'invention peut comprendre **une étape de modulation 220** du signal lumineux. La modulation peut être réalisée par un modulateur 104. De préférence, la modulation est mise en oeuvre avant l'étape 200 d'injection dans la fibre optique 106. La modulation peut permettre un décalage de la fréquence du signal lumineux d'une valeur égale à v_{A}. La fréquence issue de la modulation peut être décalée (vers le haut ou vers le bas) par rapport à la fréquence du signal lumineux issue de la source lumineuse. La modulation peut comprendre la génération de différentes impulsions de fréquence selon une durée et un taux de répétition prédéterminé.

Le signal lumineux modulé est injecté dans la fibre optique, qui génère un signal de rétrodiffusion Rayleigh.

Un procédé 1 de reconstruction selon l'invention peut comprendre **une étape 300 de détection optique hétérodyne résolue en polarisation.** Cette étape 300 de détection optique comporte avantageusement la génération d'au moins deux signaux lumineux rétrodiffusés de polarisations orthogonales, produisant un battement de préférence de fréquence v_{A}. En particulier, cette génération peut être réalisée par un moyen de séparation optique et à partir d'une rétrodiffusion du signal lumineux injecté et d'une onde électromagnétique provenant d'un oscillateur local.

Le signal lumineux rétrodiffusé de fréquence v₀ ou v₀+v_{A} est alors couplé avec le signal lumineux issu de l'oscillateur local 107 à une fréquence v₀ ou v₀+v_{A}. Le couplage des fréquences v₀ et v₀+v_{A} permet auxdits aux moins deux signaux lumineux rétrodiffusés de polarisation orthogonales de présenter de préférence une fréquence v_{A}.

En outre, lorsque le signal de rétrodiffusion est mélangé avec le signal issu de l'oscillateur local, les signaux se combinent pour fournir une différence de fréquence qui conserve à la fois l'amplitude et les informations de phase du signal de rétrodiffusion, à condition que l'oscillateur local ait une intensité constante et une bande suffisamment étroite. Les signaux de l'oscillateur local et de rétrodiffusion ayant une fréquence différente, l'étape peut donc correspondre une détection optique hétérodyne.

La détection hétérodyne consiste à recombiner le signal rétrodiffusé à analyser avec le signal lumineux de l'oscillateur local 107, les deux ayant des fréquences qui diffèrent.

Comme décrit jusqu'ici, l'avantage de la détection hétérodyne est l'amélioration du rapport signal sur bruit, ainsi qu'une amélioration de la plage dynamique puisque le signal hétérodyne est proportionnel à la racine carrée de l'intensité de la rétrodiffusion.

En outre, l'étape de génération permet de séparer le mélange des signaux en deux polarisations orthogonales. Ceci atténue les évanouissements de polarisation et l'affaiblissement du signal lorsque les polarisations du signal de rétrodiffusion et du signal de l'oscillateur local ne sont pas identiques.

Les signaux lumineux de rétrodiffusion de polarisation orthogonales sont dirigés vers au moins deux détecteurs séparés 203, un pour chacune des polarisations orthogonales.

Optionnellement, les signaux lumineux de rétrodiffusion de polarisation orthogonale peuvent être dirigés vers quatre détecteurs séparés 203.

Un procédé 1 de reconstruction selon l'invention peut comprendre **une étape 400 de conversion,** des signaux lumineux rétrodiffusés de polarisations orthogonales en signaux analogiques initiaux. De préférence, cette étape est réalisée par au moins un photodétecteur 203.

Ceci permet de générer des signaux électriques comportant les informations du signal rétrodiffusé. Chaque signal analogique initial correspondant à un des signaux lumineux de polarisations orthogonales est alors dirigé vers une étape 500 de détection électrique homodyne.

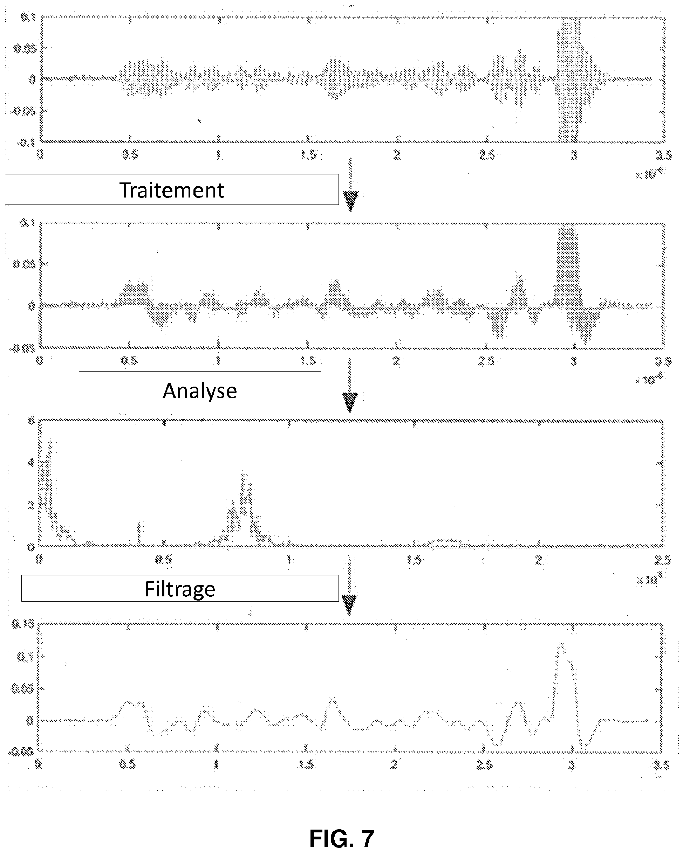

Un procédé 1 de reconstruction selon l'invention peut comprendre **une étape 500 de détection électrique homodyne.** Cette étape est de préférence réalisée par un démodulateur IQ permettant une démodulation de type IQ sur chacun des signaux analogiques initiaux. Une étape de détection homodyne selon un mode de réalisation de l'invention est illustrée à la **figure 7****.** Cette détection électrique homodyne peut être réalisée à la fréquence v_{A} en mélangeant les signaux analogiques initiaux détecté pour chacune des polarisations à des signaux analogiques de référence ayant une fréquence v_{A}.

L'étape 500 de détection électrique homodyne permet de générer des signaux analogiques démodulées I (I₁,I₂) et Q (Q₁,Q₂) pour chacun des signaux lumineux rétrodiffusés de polarisation orthogonales.

Chaque signal analogique correspondant à un des signaux lumineux de polarisations orthogonales est divisé en deux parties avant d'être orienté vers une étape 525 de mélange.

Avantageusement, l'étape 525 de mélange permet une multiplication en phase et une multiplication en quadrature de phase de signaux analogiques provenant de chacun des signaux lumineux rétrodiffusés de polarisation orthogonale avec un signal de référence.

Ainsi, un procédé selon l'invention peut comporter une étape 520 de déphasage d'une partie des signaux lumineux rétrodiffusés, d'une partie des signaux analogiques initiaux ou d'une partie du signal analogique de référence.

Selon un mode de réalisation particulier de l'invention, l'étape de démodulation IQ peut comprendre une étape de déphasage d'une partie d'un signal analogique de référence à la fréquence v_{A}. De préférence ce signal, de préférence électrique, est issu du modulateur 104.

Une seule partie du signal analogique de référence à la fréquence v_{A} est alors déphasé puis multiplié avec chacun des signaux analogiques initiaux rétrodiffusés tel qu'illustré à la **figure 2****.** Ce mode de réalisation présente l'avantage de l'utilisation d'une photodiode balancées par polarisations détectées et d'une démodulation IQ électrique reposant sur le déphasage du signal de référence de fréquence v_{A} provenant du modulateur dont les propriétés restent constantes dans le temps.

Selon un autre mode de réalisation particulier de l'invention, l'étape de démodulation IQ peut comprendre une étape de déphasage d'une partie des signaux analogiques initiaux, de préférence correspondant à un signal lumineux rétrodiffusé, puis une multiplication avec un signal analogique de référence. De manière préférentielle, une seule partie de chaque signal analogique initial correspondant à un des signaux lumineux rétrodiffusés de polarisation orthogonale, est déphasé puis multiplié avec le signal analogique de référence v_{A} tel qu'illustré à la **figure 3****.** Ce mode de réalisation présente l'avantage de l'utilisation d'une photodiode balancées par polarisations détectées et d'une démodulation IQ électrique.

Selon encore un autre mode de réalisation particulier de l'invention, l'étape de démodulation IQ peut comprendre une étape de déphasage d'une partie des signaux lumineux rétrodiffusés tel qu'illustré à la **figure 4****.** Dans ce mode de réalisation, les signaux lumineux rétrodiffusés sont déphasés de manière optique ce qui rend le schéma de détection électrique plus simple. Ce mode de réalisation nécessite l'utilisation de quatre photodétecteurs balancés contre uniquement deux pour les deux modes de réalisations précédents.

Ainsi, l'étape de détection électrique homodyne peut comprendre **une étape 520 de déphasage.** Cette étape peut être réalisée par au moins un déphaseur 206.

Alternativement, l'étape de détection optique hétérodyne comprend une étape de déphasage. Cette étape peut être réalisée par un hybrideur 90°.

En outre, l'étape de déphasage peut être précédée ou suivie par **une étape 510 d'amplification intermédiaire.** L'étape d'amplification intermédiaire correspond à une amplification du signal électrique issu du modulateur 104 à la fréquence de modulation v_{A}. L'étape d'amplification peut être mise en oeuvre par un amplificateur intermédiaire.

Le signal issu du modulateur 104 et amplifié peut alors être orienté d'une part vers l'étape de déphasage 520 et d'autre part vers une étape de mélange.

Par ailleurs, et de préférence suite à l'étape de déphasage, un procédé selon l'invention peut comprendre une étape de mélange 525 de chacun des signaux analogiques initiaux correspondant à un signal lumineux rétrodiffusé avec le signal analogique de référence (en phase et/ou en quadrature de phase), de préférence issu du modulateur 104, à une fréquence v_{A}. De préférence cette étape est réalisée par au moins un mélangeur électrique 205.

Ainsi, chaque partie de chaque signal analogique initial issu d'un des deux signaux lumineux de rétrodiffusion de polarisations orthogonales est mélangé d'un part avec un signal analogique de référence issu du modulateur 104, correspondant à une multiplication en phase. L'autre partie de chaque signal analogique initial issu d'un des deux signaux lumineux de rétrodiffusion de polarisations orthogonales est mélangé avec un signal de référence déphasé issu du modulateur 104 déphasé de 90 °, correspondant à une multiplication en quadrature de phase du signal.

Alternativement, l'autre partie de chaque signal analogique initial issu d'un des deux signaux lumineux de rétrodiffusion de polarisations orthogonales peut être déphasé de 90 ° et être mélangé avec un signal de référence issu du modulateur 104, correspondant à une multiplication en quadrature de phase.

Un procédé mis en oeuvre par l'invention, peut comprendre **une étape 530 de filtrage analogique** permettant de supprimer une partie des fréquences des signaux analogiques, de préférence supérieures à un seuil prédéterminé. De préférence, l'étape de filtrage analogique correspond à une étape de filtrage des hautes fréquences. Ceci permet de ne conserver que les basses fréquences. Cette étape peut être réalisée au moyen de filtre passe bas 207. Ainsi, l'étape de filtrage permet de s'affranchir du bruit pouvant être généré lors de l'étape d'amplification et de déphasage, pour ne conserver que les signaux en phase et en quadrature de phase. Ceci permet de diminuer le bruit du signal final.

Ainsi, l'étape 500 de détection électrique homodyne, par un démodulateur IQ, permettant une démodulation de type IQ par exemple sur chacun des signaux analogiques des signaux lumineux rétrodiffusés, permet de générer des signaux analogiques démodulés I (I₁,I₂) et Q (Q₁,Q₂) pour chacun des signaux analogiques des signaux lumineux rétrodiffusés.

Par ailleurs, et de manière préférée, les deux polarisations sont détectées en parallèle de façon synchronisée dans le temps, autrement dit en même temps.

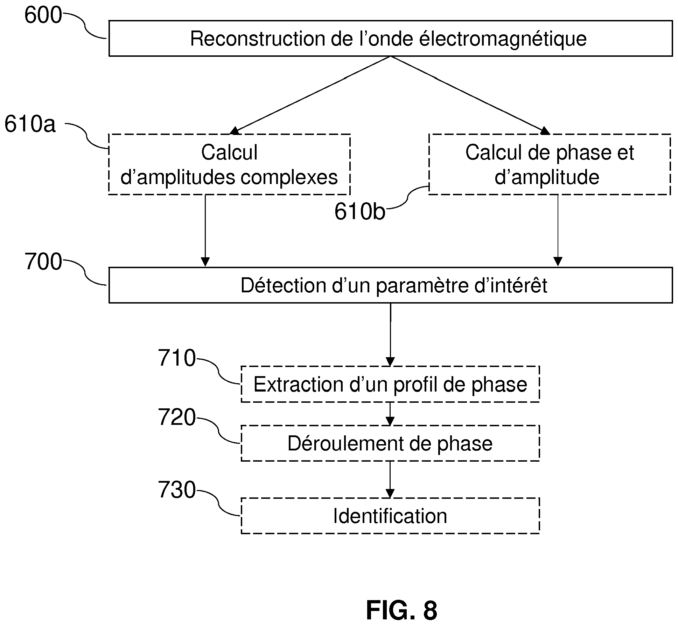

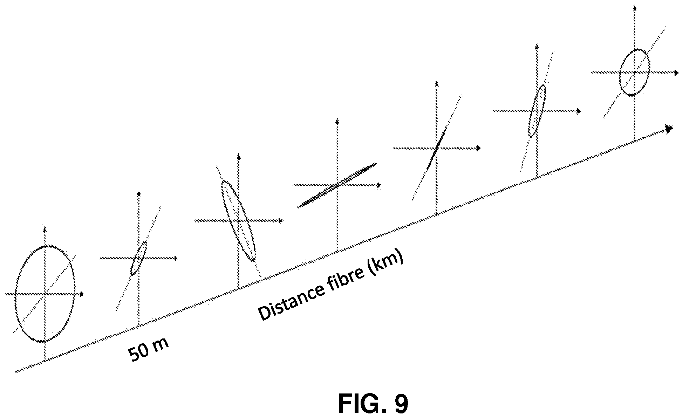

Un procédé 1 de reconstruction selon l'invention peut comprendre **une étape 600** de reconstruction de l'onde électromagnétique vectorielle rétrodiffusée dans tout ou partie de la fibre optique 106, de préférence en fonction de valeurs d'amplitude complexe (l+jQ) ou des valeurs de phase et d'amplitude déterminées, à partir des signaux analogiques démodulés I (I₁,I₂) et Q (Q₁,Q₂) générés. Cette étape peut être réalisée par un module de traitement 209, tel qu'illustré à la **figure 8** **et à la** **figure 9****.** En effet, comme décrit précédemment, ces signaux analogiques démodulés I (I₁,I₂) et Q (Q₁,Q₂) peuvent être utilisés pour calculer un signal complexe (l+jQ) qui comportera toutes les informations nécessaires à la reconstruction du signal réel et donc à la reconstruction de l'onde électromagnétique vectorielle. Ces signaux analogiques démodulés I (I₁,I₂) et Q (Q₁,Q₂) peuvent être utilisés pour calculer des valeurs de phase et d'amplitude qui comporteront toutes les informations nécessaire à la reconstruction du signal réel et donc à la reconstruction de l'onde électromagnétique vectorielle.

Le procédé peut comprendre **une étape 610a de calcul** d'amplitude complexe (l+jQ) à partir des signaux analogiques démodulés I (I₁,I₂) et Q (Q₁,Q₂). En outre, l'étape de reconstruction de l'onde électromagnétique vectorielle rétrodiffusée peut comprendre une étape de calcul de la phase et/ou de l'amplitude du signal lumineux rétrodiffusé à partir des amplitudes complexes (l+jQ) déterminées. De préférence, cette étape de calcul est réalisée dans tout ou partie de la fibre optique. En outre, cette étape peut être réalisée pour tout axes de projection dans tout ou partie de la fibre optique en fonction des valeurs d'amplitudes complexes (l+jQ) déterminées à partir des signaux analogiques démodulés I (I₁,I₂) et Q (Q₁,Q₂) générés.

En outre, un procédé selon l'invention peut comprendre une étape 610b de calcul de phase et d'amplitude à partir des signaux analogiques démodulés I (I₁,I₂) et Q (Q₁,Q₂). En outre, l'étape de reconstruction de l'onde électromagnétique vectorielle rétrodiffusée peut comprendre une étape de calcul d'amplitude complexe (l+jQ), dans tout ou partie de la fibre optique à partir des valeurs de phase et d'amplitude calculées à partir des signaux analogiques démodulés I (I₁,I₂) et Q (Q₁,Q₂) générés.

Le procédé peut comprendre une étape de calcul de l'amplitude complexe du signal lumineux rétrodiffusé à partir des valeurs de phase et d'amplitude déterminées. De préférence, cette étape de calcul est réalisée dans tout ou partie de la fibre optique.

Une pluralité de valeurs d'amplitude et/ou de valeurs de phase sont obtenues en tout ou partie de la fibre optique et pour chaque signal lumineux de polarisation orthogonale.

En outre, l'étape de reconstruction 600 peut comprendre un calcul d'amplitude complexe et ou de l'amplitude et/ou de la phase du signal rétrodiffusé pour tous les angles du champ électrique et sur tout ou partie de la fibre optique. Le calcul d'amplitude complexe et ou de l'amplitude et/ou de la phase pour tous les angles du champ électrique peut correspondre à la création d'un vecteur, par changement de référentiel. En outre, l'angle est compris par exemple entre 0 et 2π.

De préférence, le calcul d'une amplitude maximale comprend l'identification d'un angle optimal associé à l'amplitude maximale pour tout axes de projection dans tout ou partie de la fibre optique. L'angle optimal correspondant de préférence, à l'angle présentant l'amplitude maximale la plus élevée parmi des amplitudes d'une pluralité d'angles correspondant aux axes de projection dans tout ou partie de la fibre optique, de préférence aux axes de projection définis dans le plan de section dans tout ou partie de la fibre optique.

De préférence, le calcul est réalisé en une pluralité de points de tout ou partie de la fibre optique.

Par relation trigonométrique, suite au changement de référentiel et à la présence dudit vecteur, le comportement de l'onde électromagnétique vectorielle rétrodiffusée dans tout ou partie de la fibre optique peut être caractérisée et donc l'onde électromagnétique vectorielle rétrodiffusée reconstruite.

Reconstruire totalement l'onde électromagnétique vectorielle rétrodiffusée permet en outre, l'accès complet et simultané des propriétés qui la caractérise (amplitude, phase, état de polarisation, degré de polarisation) et qui caractérise électromagnétiquement son milieu de propagation (variation d'indice, de chemin optique, biréfringence, dispersion modale de polarisation) et ceux de façon répartie dans tout ou partie de la fibre. Ainsi, grâce à l'invention ces propriétés pourront être utilisées isolément ou de manière combinée pour déterminer de façon répartie dans tout ou partie de la fibre optique interrogée une variation d'une ou plusieurs influences environnementales agissant sur le comportement de l'onde électromagnétique Ceci permet d'obtenir l'amplitude maximale et l'angle de projection nécessaire pour atteindre l'amplitude maximale pour tout ou partie de la fibre optique. De préférence, le calcul d'amplitude maximale comprend l'identification d'un angle à partir d'une pluralité d'angle correspondant aux axes de projection possibles définis dans le plan de section de la fibre dans tout ou partie de la fibre optique correspondant à l'axe principal optique.

Ainsi, les amplitudes maximales peuvent être déterminées par calcul mathématique à partir des valeurs d'amplitudes complexes (l+jQ) ou des valeurs de phase et d'amplitude correspondantes déterminées. De même, les valeurs de phase correspondantes peuvent être calculées à partir des valeurs d'amplitudes complexes (l+jQ) déterminées.

Un procédé selon l'invention peut comprendre **une étape de détection 700 d'un paramètre d'intérêt,** tel que notamment illustré **en** **figure 8****.**

Ainsi, un procédé selon l'invention peut comprendre, en outre, **une étape 710 d'extraction d'un profil de phase.** Cette étape est de préférence réalisée pour chaque projection réalisée et/ou pour chaque phase calculée à partir des amplitudes complexes (l+jQ) déterminées. En effet, pour chaque projection, la phase peut être déduite ce qui permet de déduire un profil de phase.

Un procédé selon l'invention peut comprendre **une étape 720 de déroulement de phase.** En effet, la phase étant circulaire, celle-ci varie selon un angle compris entre 0 et 2π (π et -π). Ainsi lorsque la phase est détectée, si la différence de phase entre deux points est supérieure à π, cette phase est ajoutée à π.

Ceci permet de s'affranchir de l'effet cyclique de la phase.

En outre, grâce à la reconstruction de l'onde électromagnétique vectorielle rétrodiffusée, il est possible également de reconstruire l'axe principal optique en fonction des amplitudes maximale et donc du signal maximal. Ainsi, grâce au procédé selon l'invention l'extraction ou le calcul de phase n'est plus limité à un seul axe optique et donc au phénomène de fading.

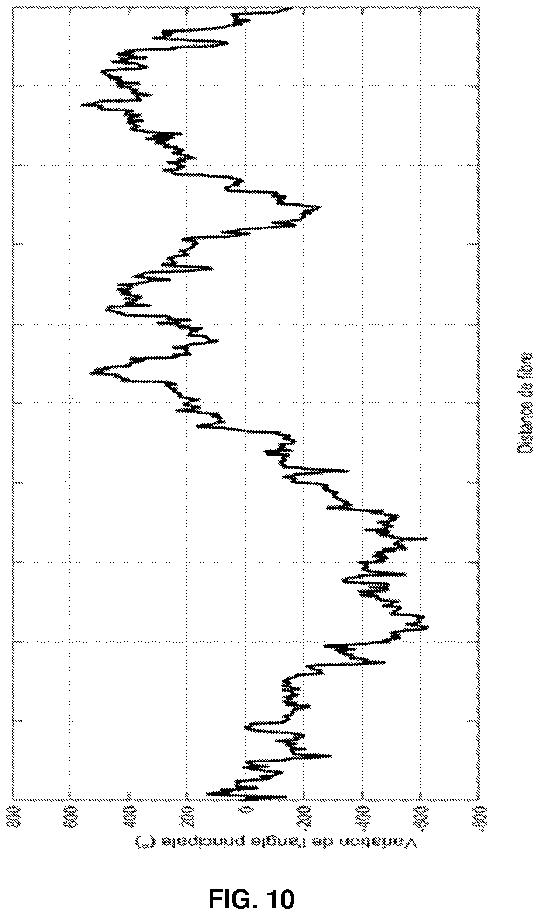

Par ailleurs, un procédé selon l'invention peut comprendre une **étape d'identification 730,** sur toute ou partie de la longueur de la fibre optique 106, de l'axe optique principal correspondant aux amplitudes maximales ou à l'angle ayant la plus forte amplitude comparée à l'ensemble des amplitudes calculées. Une telle identification est présentée sur **la** **figure 10****.** En effet, chaque axe optique comprend une amplitude et une phase différentes, le comportement du champ électrique de l'onde électromagnétique rétrodiffusée étant alors différent dans tout ou partie de la fibre optique. Ainsi, cette étape consiste à déterminer sur tout ou partie de la fibre optique les axes optiques sur lesquels l'amplitude du signal est la plus importante. Une telle étape peut notamment comporter une projection des amplitudes complexes sur chaque axe optique.

Ainsi, le module de traitement est apte à reconstruire un axe principal optique en fonction des valeurs d'amplitude et de phase calculées.

Un procédé 1 de reconstruction selon l'invention permet également par exemple, d'identifier un angle spécifique, de comparer des angles différents d'une ou plusieurs fibres optiques ou encore d'identifier des axes spécifiques et leurs différentes évolutions. L'invention est particulièrement avantageuse dans le sens où elle permet de mitiger le phénomène de fading et de surplus de récupérer plus de 3 dB pouvant être perdu suite aux coupleurs. Ainsi, il est possible de récupérer plus de 50 % du signal est d'améliorer grandement les analyses par mesures réparties par fibre optique et par rétrodiffusion Rayleigh.

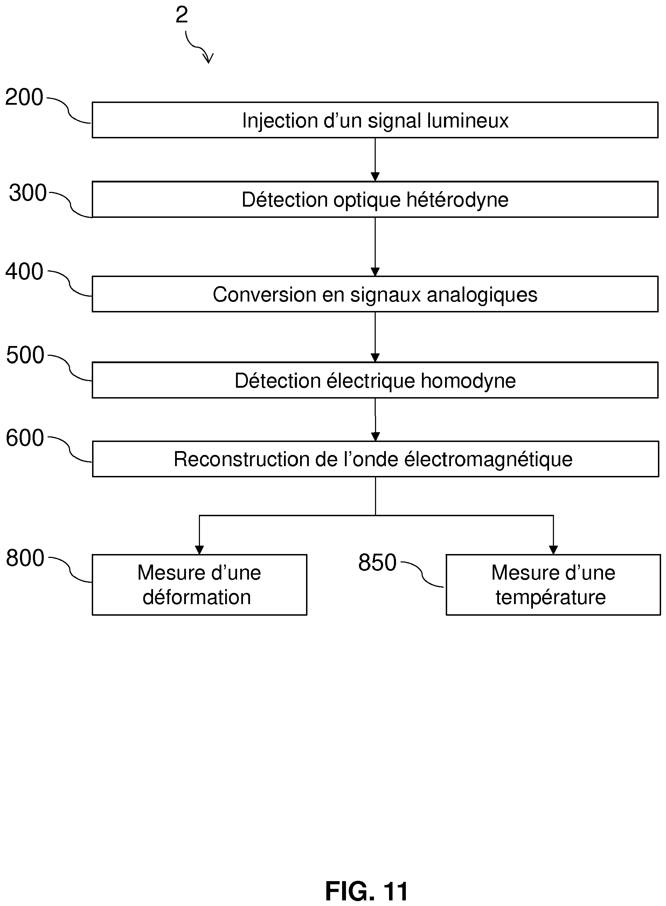

Selon un autre aspect, l'invention concerne **un procédé 2 de mesure optoélectronique** dans un système de détection acoustique distribuée tel qu'illustré à la **figure 11****.**

Le système de détection acoustique distribuée (DAS pour Distributed Acoustique Sensing en terminologie anglo-saxonne) détecte les vibrations et capturent l'énergie acoustique le long de la fibre optique. En outre, ce système permet de détecter les signaux de fréquence acoustique sur de grande distance. La perturbation acoustique sur la fibre génère son élongation ou sa compression ce qui provoque un changement de relation de phase. En outre, ce procédé peut comprendre une comparaison afin de déterminer comment la phase varie d'un point de la fibre optique à un autre comme la différence de phase est proportionnelle à l'élongation ou la compression de la fibre. Grâce à l'invention, la mesure de la différence de phase est de préférence réalisée sur l'axe principal optique qui correspond à l'axe où l'extraction de phase est optimisée. Ainsi, cette étape permet de déterminer comment la phase varie entre deux points. Avantageusement ces systèmes sont peu coûteux et hautement fiables.

Un procédé 2 de mesure optoélectronique peut comprendre **une reconstruction d'une onde électromagnétique** vectorielle rétrodiffusée dans tout ou partie d'une fibre optique 106 selon l'invention et tel que décrit précédemment.

Un procédé 2 de mesure optoélectronique peut comprendre **une mesure d'une déformation 800** et/**ou de variation de température 850** de la fibre optique 106 en fonction de l'onde électromagnétique vectorielle rétrodiffusée reconstruite.

Lorsqu'un signal lumineux est rétrodiffusé celui-ci comporte des informations liées aux influences environnementales de la fibre. Ainsi, si l'environnement de la fibre optique subi une contrainte (déformation par exemple), le signal rétrodiffusé de la fibre comprendra l'information de cette déformation. La fibre optique permet une mesure d'une déformation 800 mais également de variation de température 850.

En effet, bien que ce qui précède ait décrit la différence de phase ou d'amplitude du signal de rétrodiffusion comme étant une contrainte incidente sur la fibre optique, d'autres paramètres, tels que les changements de température, ont également la capacité d'influer sur la phase entre les sections de la fibre. De plus, la contrainte sur la fibre peut résulter d'autres effets externes que ceux discutés ci-dessus. Par exemple, un changement de pression dans la fibre peut entraîner une contrainte sur la fibre, telle qu'une conversion de pression en contrainte par le revêtement de fibre.

Un procédé 2 de mesure optoélectronique peut comprendre **une mesure d'une déformation de la fibre optique 106 sur l'axe principal optique reconstruit.**

Comme détaillé précédemment, l'onde électromagnétique est liée à l'axe principal optique. Ainsi à partir de l'onde électromagnétique vectorielle rétrodiffusée reconstruite selon l'invention, l'axe principal optique peut également être reconstruit.

Le procédé selon l'invention comprend également une mesure d'une déformation de la fibre optique ou une variation de température sur l'axe principal optique reconstruit selon l'invention. De préférence, la mesure de la déformation est réalisée par une fibre optique.

Les signaux DAS sont connus pour les évanouissements optiques, dans lesquels l'intensité du signal dépend du temps, en raison de changements lents dans la fibre qui entraînent des modifications de la longueur du chemin optique. En utilisant le procédé selon l'invention, le système peut être optimisé afin de générer une meilleure analyse de signal par DAS.

Reconstruire totalement l'onde électromagnétique vectorielle rétrodiffusée permet en outre, l'accès complet et simultané des propriétés qui la caractérise (amplitude, phase, état de polarisation, degré de polarisation) et qui caractérise électromagnétiquement son milieu de propagation (variation d'indice, de chemin optique, biréfringence, dispersion modale de polarisation) et ceux de façon répartie dans tout ou partie de la fibre. Ainsi, grâce à l'invention ces propriétés pourront être utilisées isolément ou de manière combinée pour déterminer de façon répartie dans tout ou partie de la fibre optique interrogée une variation d'une ou plusieurs influences environnementales agissant sur le comportement de l'onde électromagnétique.

### Exemples

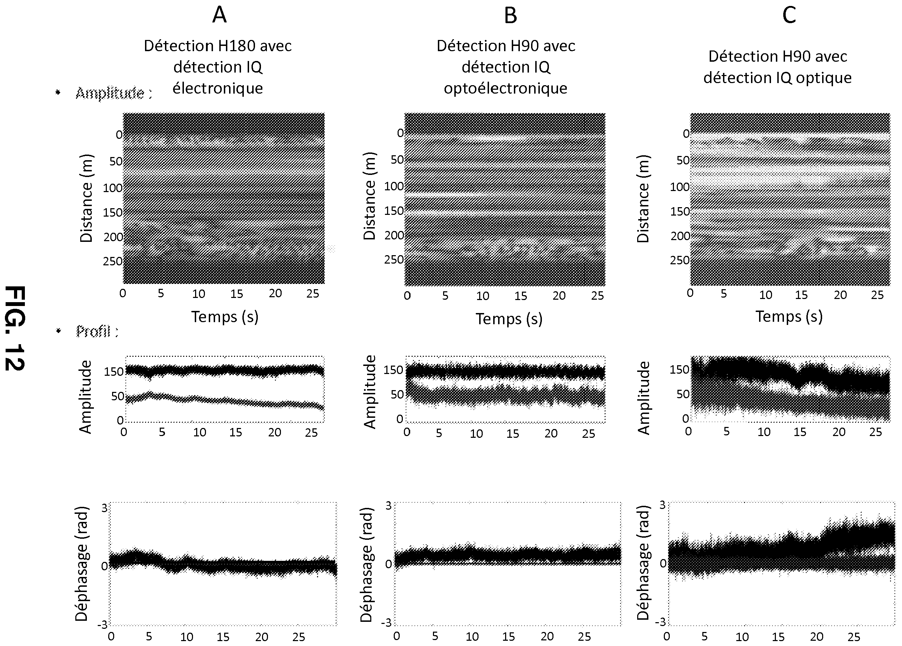

Un exemple de réalisation d'un procédé selon l'invention et des techniques de l'art antérieur sont illustrés aux figures 12A, 12B, 12C.

**Une première détection** avec un hybrideur 180 ° (H180) avec une détection IQ électronique est réalisée et reportée sur la figure 12A. Cet exemple illustre les résultats d'amplitude et de phase obtenu par un procédé selon l'invention, tel qu'illustré à la figure 2.

Grâce à ce procédé, le profil d'amplitude est obtenu et ce de façon particulièrement précise. En outre, un tel procédé présente très peu de bruit. Grâce à une telle qualité de résultats d'amplitude, il est aisé de calculer ou déduire la phase afin de caractériser et donc de reconstruire l'onde électromagnétique vectorielle rétrodiffusée. De façon tout à fait pratique, le vecteur électrique, tel que décrit précédemment, oscille suivant les influences environnementales qui se présentent sur la fibre. Un tel vecteur électrique oscille selon une phase et une amplitude. Grâce au procédé selon l'invention l'amplitude et la phase obtenues sont peu bruitées, il est donc particulièrement plus avantageux d'extraire les valeurs d'amplitudes et de phases caractérisant l'onde électromagnétique vectorielle rétrodiffusée pour chaque polarisation.

La reconstruction de l'onde électromagnétique vectorielle rétrodiffusée permet de caractériser plusieurs influences environnementales pouvant s'exercer sur tout ou partie de la fibre optique. Avantageusement, le procédé ne présente pas de discontinuité dans le temps et dans l'espace.

**Une deuxième détection** est réalisée avec un hybrideur 90 ° (H90) avec une détection IQ optoélectronique et reportée sur la figure 12B. Cet exemple illustre les résultats obtenus par un procédé selon l'invention tel qu'illustré à la figure 4.

Le profil d'amplitude et de phase présentent un bruit plus important qu'avec une détection H180 avec détection IQ électronique, cependant, il est aisé de retrouver l'amplitude et la phase exacte au moyen de cette détection.

En effet, grâce à la détection électrique homodyne, le bruit et le phénomène de fading pour l'extraction de phase sont fortement diminués. L'extraction de phase est réalisée avec très peu de bruit, même pour des signaux faibles dans la fibre optique. L'extraction de phase se fait sur la projection du champ électrique. En outre, il est également possible d'identifier son axe principal dans tout ou partie de la fibre optique, accessible grâce à la reconstruction. Ainsi, aucun critère de sélectivité n'est imposé, l'atténuation du phénomène de fading repose entièrement sur les propriétés physiques de l'onde électromagnétique guidée dans la fibre optique. En outre, la reconstruction permet d'opter pour le cas le plus favorable pour une extraction la moins bruitée de la phase. L'invention présente l'avantage d'être moins complexe que les systèmes utilisant une diversité en fréquence optique pour atténuer l'effet de fading.

En outre, aucun critère de sélectivité n'est appliqué.

**Une troisième détection** est réalisée avec un hybrideur 90 ° (H90) avec détection IQ homodyne optique et reportée sur la figure 12C. Cette détection homodyne est donc purement et uniquement optique contrairement à l'invention et représente une des techniques de l'art antérieur tel que proposé dans la référence.

Une telle détection génère un bruit important tant au niveau du profil d'amplitude que de l'extraction de phase. Ainsi, il n'est pas possible de remonter aux informations supportées par l'onde électromagnétique, ou de reconstruire l'onde électromagnétique vectorielle rétrodiffusée. L'amplitude et la phase sont très bruitées. En effet, le bruit basse fréquence n'est pas filtré par la fréquence de la porteuse et la détection électrique. Ainsi, le signal est totalement bruité à tel point qu'aucune information ne peut en être extraite.

Un procédé selon l'invention est donc particulièrement avantageux et permet de répondre aux besoins existants dans le domaine des mesures réparties par fibre optique.

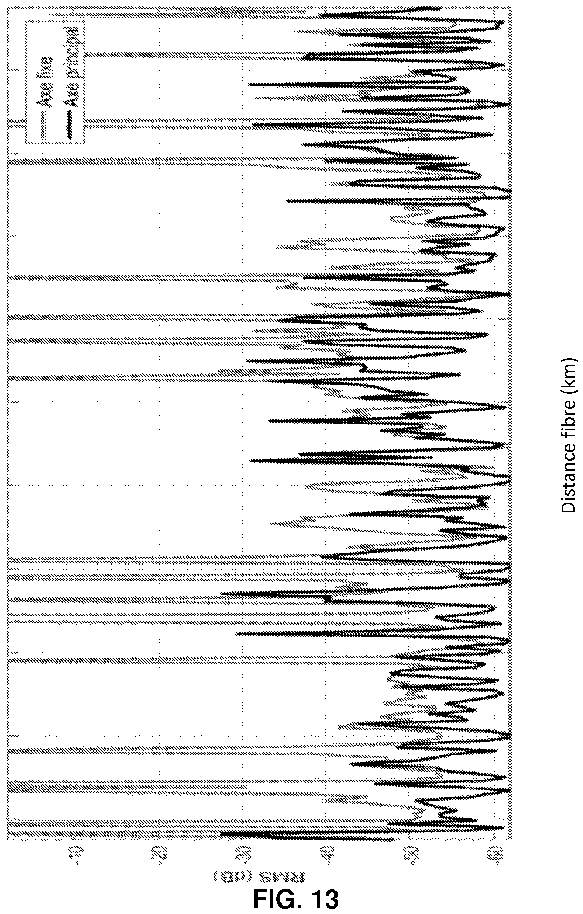

Un autre exemple comparatif d'un résultat final est illustré à la **figure 13****.** Les différentes mesures sont obtenues à partir d'un DAS.

Les mesures représentées par la courbe grise illustrent les résultats de l'art antérieur et la courbe noire, représente les mesures obtenues selon un procédé selon l'invention.

La courbe grise représente l'extraction de différentes phases le long de la fibre optique pour trouver une déformation. Toutefois, celle-ci est réalisée sur une seule et unique polarisation, sur un seul axe fixe. En outre, un bruit important est présent.

La courbe noire, illustrant le procédé selon l'invention et comprenant l'identification d'un axe principal optique dans tout ou partie de la fibre optique permet d'obtenir des résultats dont la qualité de mesure est améliorée et dont le bruit est minimisé.

## Revendications

1. Procédé (1) de reconstruction d'une onde électromagnétique vectorielle rétrodiffusée dans tout ou partie d'une fibre optique (106), ledit procédé comprenant :
- Une étape (200) d'injection dans la fibre optique (106) d'un signal lumineux de fréquence v₀ ou v₀+v_{A},
- Une étape (300) de détection optique hétérodyne résolue en polarisation comportant la génération, par un moyen de séparation optique (202,303) et à partir d'une rétrodiffusion du signal lumineux injecté et d'une onde électromagnétique provenant d'un oscillateur local, d'au moins deux signaux lumineux rétrodiffusés de polarisation orthogonale, produisant un battement de fréquence v_{A},
- Une étape (400) de conversion, par au moins deux photo-détecteurs (203), des signaux lumineux rétrodiffusés de polarisation orthogonale en signaux analogiques initiaux, **caractérisé en ce que** le procédé comprend
- Une étape (500) de détection électrique homodyne, par un démodulateur IQ (211,302), permettant une démodulation de type IQ sur chacun des signaux analogiques initiaux, de façon à générer des signaux analogiques démodulés I (I₁,I₂) et Q (Q₁,Q₂) pour chacun des signaux lumineux rétrodiffusés de polarisation orthogonale, et
- Une étape (600) de reconstruction, par un module de traitement (209), de l'onde électromagnétique vectorielle rétrodiffusée dans tout ou partie de la fibre optique (106) à partir des signaux analogiques démodulés I (I₁,I₂) et Q (Q₁,Q₂) générés.

2. Procédé (1) de reconstruction selon la revendication 1, **caractérisé en ce qu'**il comprend une étape de déphasage (520) d'une partie des signaux lumineux rétrodiffusés, d'une partie des signaux analogiques initiaux ou d'un signal analogique de référence à la fréquence v_{A}.

3. Procédé (1) de reconstruction selon la revendication 1 ou 2, **caractérisé en ce que** l'étape de détection électrique homodyne (500) comprend une démodulation à la fréquence v_{A} par le démodulateur IQ.

4. Procédé (1) de reconstruction selon l'une des revendications précédentes, **caractérisé en ce qu'**il comprend une étape (610a) de calcul d'amplitude complexe (l+jQ) à partir des signaux analogiques démodulés I (I₁,I₂) et Q (Q₁,Q₂) générés.

5. Procédé (1) de reconstruction selon la revendication 4, **caractérisé en ce que** l'étape (600) de reconstruction de l'onde électromagnétique vectorielle rétrodiffusée comprend une étape de calcul de phase et/ou d'amplitude dans tout ou partie de la fibre optique (106) et pour tout axes de projection dans tout ou partie de la fibre optique en fonction des valeurs d'amplitudes complexes (I+jQ) déterminées à partir des signaux analogiques démodulés I (I₁,I₂) et Q (Q₁,Q₂) générés.

6. Procédé (1) de reconstruction selon l'une des revendications 1 à 3, **caractérisé en ce qu'**il comprend une étape de calcul (610b) de valeurs de phase et d'amplitude à partir des signaux analogiques démodulés I (I₁,I₂) et Q (Q₁,Q₂) générés.

7. Procédé (1) de reconstruction selon la revendication 6, **caractérisé en ce que** l'étape (600) de reconstruction de l'onde électromagnétique vectorielle rétrodiffusée comprend une étape de calcul d'amplitude complexe dans tout ou partie de la fibre optique (106) et pour tout axes de projection dans tout ou partie de la fibre optique (106) en fonction des valeurs d'amplitude et de phase calculées à partir des signaux analogiques démodulés I (I₁,I₂) et Q (Q₁,Q₂) générés.

8. Procédé (1) de reconstruction selon l'une des revendications précédentes, **caractérisé en ce que** le procédé comprend le calcul d'une amplitude maximale comprenant l'identification d'un angle optimal associé à l'amplitude maximale pour tout axe de projection dans tout ou partie de la fibre optique, ledit angle optimal correspondant à l'angle présentant l'amplitude maximale la plus élevée parmi des amplitudes d'une pluralité d'angles correspondant aux axes de projection dans tout ou partie de la fibre optique.

9. Procédé (1) de reconstruction selon l'une des revendications précédentes, **caractérisé en ce qu'**il comprend une étape de détection (700) d'un paramètre d'intérêt.

10. Procédé (1) de reconstruction selon l'une des revendications précédentes, **caractérisé en ce qu'**il comprend une étape (730) d'identification d'un axe principal optique du signal lumineux rétrodiffusé dans tout ou partie de la fibre optique (106) à partir d'un calcul d'amplitude maximale.

11. Procédé (1) de reconstruction selon l'une des revendications précédentes, **caractérisé en ce qu'**il comprend une étape de modulation (220) du signal lumineux par un modulateur (104), avant l'étape (200) d'injection dans la fibre optique (106), ladite modulation permettant un décalage de la fréquence du signal lumineux d'une valeur égale à v_{A}.

12. Procédé (1) de reconstruction selon la revendication précédente, **caractérisé en ce qu'**il comprend une étape (510) d'amplification intermédiaire du signal électrique issu du modulateur (104) à la fréquence de modulation v_{A}, par exemple par un amplificateur (204).

13. Procédé (1) de reconstruction selon l'une des revendications précédentes, **caractérisé en ce qu'**il comprend une étape (530) de filtrage analogique, par exemple par au moins un filtre passe bas (207), permettant de supprimer les fréquences des signaux analogiques supérieures à un seuil prédéterminé.

14. Procédé (2) de mesure optoélectronique dans un système de détection acoustique distribuée comprenant une reconstruction d'une onde électromagnétique vectorielle rétrodiffusée dans tout ou partie d'une fibre optique (106) selon l'une des revendications 1 à 13 et une mesure d'une déformation et/ou d'une variation de température dans tout ou partie de la fibre optique (106) en fonction de l'onde électromagnétique vectorielle rétrodiffusée reconstruite.

15. Procédé (2) de mesure optoélectronique selon la revendication 14 **caractérisé en ce qu'**il comprend une mesure d'une déformation et/ou d'une variation de température dans tout ou partie de la fibre optique (106) sur un axe principal optique reconstruit.

16. Dispositif (3) de reconstruction d'une onde électromagnétique vectorielle rétrodiffusée dans tout ou partie d'une fibre optique (106) ledit dispositif comprenant :
- Une source (101) lumineuse configurée pour générer un signal lumineux de fréquence v₀, apte à être injecté dans la fibre optique (106),
- Un moyen de séparation optique (202,303) configuré pour générer au moins deux signaux lumineux rétrodiffusés de polarisation orthogonale, produisant un battement de fréquence v_{A}, à partir d'une rétrodiffusion du signal lumineux injecté et d'une onde électromagnétique provenant d'un oscillateur local (107),
- Au moins deux photodétecteurs (203), configuré pour convertir les signaux lumineux rétrodiffusés de polarisation orthogonale en signaux analogiques initiaux, **caractérisé en ce que** le dispositif comprend
- Un démodulateur IQ (211,302) agencé pour réaliser une détection électrique homodyne, permettant une démodulation de type IQ sur chacun des signaux analogiques initiaux de façon à générer des signaux analogiques démodulés I (I₁,I₂) et Q (Q₁,Q₂) pour chacun des signaux lumineux rétrodiffusés de polarisation orthogonale, et
- Un module de traitement (209) configuré pour reconstruire l'onde électromagnétique vectorielle rétrodiffusée dans tout ou partie de la fibre optique (106) à partir des signaux analogiques démodulés I (I₁,I₂) et Q (Q₁,Q₂) générés.

## Patentansprüche

1. Verfahren (1) zur Rekonstruktion einer elektromagnetischen Vektorwelle, die in einer gesamten oder einem Teil einer optischen Faser (106) rückgestreut wird, wobei das Verfahren umfasst:
- einen Schritt (200) des Injizierens eines Lichtsignals mit der Frequenz v₀ oder v₀+v_{A} in die optische Faser (106),
- einen Schritt (300) der polarisationsaufgelösten optischen heterodynen Detektion, der die Erzeugung, durch ein optisches Trennmittel (202, 303) und ausgehend von einer Rückstreuung des injizierten Lichtsignals und einer elektromagnetischen Welle, die von einem lokalen Oszillator stammt, von mindestens zwei rückgestreuten Lichtsignalen mit orthogonaler Polarisation umfasst, wodurch eine Frequenzschwebung v_{A} erzeugt wird,
- einen Schritt (400) der Umwandlung, durch mindestens zwei Fotodetektoren (203), von rückgestreuten Lichtsignalen mit orthogonaler Polarisation in ursprüngliche Analogsignale, **dadurch gekennzeichnet, dass** das Verfahren Folgendes umfasst
- einen Schritt (500) der homodynen elektrischen Detektion durch einen IQ-Demodulator (211, 302), der eine IQ-Demodulation für jedes der ursprünglichen Analogsignale ermöglicht, um demodulierte Analogsignale I (I₁,I₂) und Q (Q₁, Q₂) für jedes der rückgestreuten Lichtsignale mit orthogonaler Polarisation zu erzeugen, und
- einen Schritt (600) der Rekonstruktion, durch ein Verarbeitungsmodul (209), der elektromagnetischen Vektorwelle, die in der gesamten oder einem Teil der optischen Faser (106) rückgestreut wird, ausgehend von den erzeugten demodulierten Analogsignalen I (I₁, I₂) und Q (Q₁, Q₂).

2. Verfahren (1) zur Rekonstruktion nach Anspruch 1, **dadurch gekennzeichnet, dass** es einen Schritt zur Phasenverschiebung (520) eines Teils der rückgestreuten Lichtsignale, eines Teils der ursprünglichen Analogsignale oder eines analogen Referenzsignals bei der Frequenz v_{A} umfasst.

3. Verfahren (1) zur Rekonstruktion nach Anspruch 1 oder 2, **dadurch gekennzeichnet, dass** der Schritt der homodynen elektrischen Detektion (500) eine Demodulation bei der Frequenz v_{A} durch den IQ-Demodulator umfasst.

4. Verfahren (1) zur Rekonstruktion nach einem der vorstehenden Ansprüche, **dadurch gekennzeichnet, dass** es einen Schritt (610a) zur Berechnung der komplexen Amplitude (I+jQ) ausgehend von den erzeugten demodulierten Analogsignalen I (I₁, I₂) und Q (Q₁, Q₂) umfasst.

5. Verfahren (1) zur Rekonstruktion nach Anspruch 4, **dadurch gekennzeichnet, dass** der Schritt (600) der Rekonstruktion der rückgestreuten elektromagnetischen Vektorwelle einen Schritt zur Berechnung der Phase und/oder der Amplitude in der gesamten oder einem Teil der optischen Faser (106) und für jede Projektionsachse in der gesamten oder einem Teil der optischen Faser als Funktion der komplexen Amplitudenwerte (l+jQ) umfasst, die ausgehend von den erzeugten demodulierten Analogsignalen I (I₁, I₂) und Q (Q₁, Q₂) bestimmt werden.

6. Verfahren (1) zur Rekonstruktion nach einem der Ansprüche 1 bis 3, **dadurch gekennzeichnet, dass** es einen Schritt zur Berechnung (610b) von Phasen- und Amplitudenwerten ausgehend von den erzeugten demodulierten Analogsignalen I (I₁, I₂) und Q (Q₁, Q₂) umfasst.

7. Verfahren (1) zur Rekonstruktion nach Anspruch 6, **dadurch gekennzeichnet, dass** der Schritt (600) der Rekonstruktion der rückgestreuten elektromagnetischen Vektorwelle einen Schritt zur Berechnung der komplexen Amplitude in der gesamten oder einem Teil der optischen Faser (106) und für jede Projektionsachse in der gesamten oder einem Teil der optischen Faser (106) als Funktion der Amplituden- und Phasenwerte umfasst, die ausgehend von den erzeugten demodulierten Analogsignalen I (I₁, I₂) und Q (Q₁, Q₂) berechnet werden.

8. Verfahren (1) zur Rekonstruktion nach einem der vorstehenden Ansprüche, **dadurch gekennzeichnet, dass** das Verfahren die Berechnung einer maximalen Amplitude umfasst, die die Identifizierung eines optimalen Winkels umfasst, der der maximalen Amplitude für jede Projektionsachse in der gesamten oder einem Teil der optischen Faser zugeordnet ist, wobei der optimale Winkel dem Winkel entspricht, der die höchste maximale Amplitude unter Amplituden einer Vielzahl von Winkeln aufweist, die den Projektionsachsen in der gesamten oder einem Teil der optischen Faser entsprechen.

9. Verfahren (1) zur Rekonstruktion nach einem der vorstehenden Ansprüche, **dadurch gekennzeichnet, dass** es einen Schritt der Detektion (700) eines interessierenden Parameters umfasst.

10. Verfahren (1) zur Rekonstruktion nach einem der vorstehenden Ansprüche, **dadurch gekennzeichnet, dass** es einen Schritt (730) zur Identifizierung einer optischen Hauptachse des rückgestreuten Lichtsignals in der gesamten oder einem Teil der optischen Faser (106) ausgehend von einer Berechnung der maximalen Amplitude umfasst.

11. Verfahren (1) zur Rekonstruktion nach einem der vorstehenden Ansprüche, **dadurch gekennzeichnet, dass** es einen Schritt zur Modulation (220) des Lichtsignals durch einen Modulator (104) vor dem Schritt (200) des Injizierens in die optische Faser (106) umfasst, wobei die Modulation eine Verschiebung der Frequenz des Lichtsignals um einen Wert von gleich v_{A} ermöglicht.

12. Verfahren (1) zur Rekonstruktion nach dem vorstehenden Anspruch, **dadurch gekennzeichnet, dass** es einen Schritt (510) zur Zwischenverstärkung des vom Modulator (104) ausgegebenen elektrischen Signals auf die Modulationsfrequenz v_{A}, z. B. durch einen Verstärker (204), umfasst.

13. Verfahren (1) zur Rekonstruktion nach einem der vorstehenden Ansprüche, **dadurch gekennzeichnet, dass** es einen Schritt (530) zur analogen Filterung umfasst, beispielsweise durch mindestens einen Tiefpassfilter (207), der es ermöglicht, die Frequenzen der Analogsignale zu unterdrücken, die über einem vorbestimmten Schwellenwert liegen.

14. Verfahren (2) zur optoelektronischen Messung in einem verteilten akustischen Detektionssystem, umfassend eine Rekonstruktion einer in einer gesamten oder einem Teil einer optischen Faser (106) rückgestreuten elektromagnetischen Vektorwelle nach einem der Ansprüche 1 bis 13 und eine Messung einer Verformung und/oder einer Temperaturänderung in der gesamten oder einem Teil der optischen Faser (106) als Funktion der rekonstruierten rückgestreuten elektromagnetischen Vektorwelle.

15. Verfahren (2) zur optoelektronischen Messung nach Anspruch 14, **dadurch gekennzeichnet, dass** es eine Messung einer Verformung und/oder einer Temperaturänderung in der gesamten oder einem Teil der optischen Faser (106) auf einer rekonstruierten optischen Hauptachse umfasst.

16. Vorrichtung (3) zur Rekonstruktion einer elektromagnetischen Vektorwelle, die in einer gesamten oder einem Teil einer optischen Faser (106) rückgestreut wird, wobei die Vorrichtung umfasst:
- eine Lichtquelle (101), die konfiguriert ist, um ein Lichtsignal mit der Frequenz v0 erzeugt, das in die optische Faser (106) injiziert werden kann,
- ein optisches Trennmittel (202, 303), das konfiguriert ist, um ausgehend von einer Rückstreuung des injizierten Lichtsignals und einer elektromagnetischen Welle, die von einem lokalen Oszillator (107) stammt, mindestens zwei rückgestreute Lichtsignale mit orthogonaler Polarisation zu erzeugen, wodurch eine Frequenzschwebung v_{A} erzeugt wird,
- mindestens zwei Fotodetektoren (203), die konfiguriert sind, um rückgestreute Lichtsignale mit orthogonaler Polarisation in ursprüngliche Analogsignale umzuwandeln, **dadurch gekennzeichnet, dass** die Vorrichtung Folgendes umfasst
- einen IQ-Demodulator (211, 302), der angeordnet ist, um eine homodyne elektrische Detektion zu realisieren, wodurch eine IQ-Demodulation für jedes der ursprünglichen Analogsignale ermöglicht wird, um demodulierte Analogsignale I (I₁, I₂) und Q (Q₁, Q₂) für jedes der rückgestreuten Lichtsignale mit orthogonaler Polarisation zu erzeugen, und
- ein Verarbeitungsmodul (209), das konfiguriert ist, um die elektromagnetische Vektorwelle, die in der gesamten oder einem Teil der optischen Faser (106) rückgestreut wird, ausgehend von den erzeugten demodulierten Analogsignalen I (I₁, I₂) und Q (Q₁, Q₂) zu rekonstruieren.

## Claims

1. A method (1) for reconstructing an electromagnetic vector wave backscattered in all or part of an optical fiber (106), said method comprising:
- A step (200) of injecting into the optical fiber (106) a light signal of a frequency v₀ or v₀+v_{A},
- A step (300) of polarization-resolved heterodyne optical detection including the generation, by an optical separation means (202, 303) and from a backscatter of the injected light signal and an electromagnetic wave from a local oscillator, of at least two orthogonally polarized backscattered light signals, producing a beat preferably of a frequency v_{A},
- A step (400) of converting, by at least two photodetectors (203), the orthogonally polarized backscattered light signals into initial analog signals, wherein the method comprises
- A step (500) of electrical homodyne detection, by an IQ demodulator (211, 302), for IQ demodulating each of the initial analog signals, so as to generate I (I₁, I₂) and Q (Q₁, Q₂) demodulated analog signals for each of the orthogonally polarized backscattered light signals, and
- A step (600) of reconstructing, by a processing module (209), the electromagnetic vector wave backscattered in all or part of the optical fiber (106) from the I (I₁, I₂) and Q (Q₁, Q₂) demodulated analog signals generated.

2. The reconstruction method (1) according to claim 1, **characterized in that** it comprises a step of shifting the phase (520) of a portion of the backscattered light signals, a portion of the initial analog signals or an analog reference signal at the frequency v_{A}.

3. The reconstruction method (1) according to claim 1 or 2, **characterized in that** the electrical homodyne detection step (500) comprises demodulating at the frequency v_{A} by the IQ demodulator.

4. The reconstruction method (1) according to one of the preceding claims, **characterized in that** it comprises a step (610a) of calculating the complex amplitude (l+jQ) from the I (I₁, I₂) and Q (Q₁, Q₂) demodulated analog signals generated.

5. The reconstruction method (1) according to claim 4, **characterized in that** the step (600) of reconstructing the backscattered electromagnetic vector wave comprises a step of calculating the phase and/or amplitude in all or part of the optical fiber (106) and for any projection axes in all or part of the optical fiber as a function of the complex amplitude values (l+jQ) determined from the I (I₁, I₂) and Q (Q₁, Q₂) demodulated analog signals generated.

6. The reconstruction method (1) according to one of claims 1 to 3, **characterized in that** it comprises a step of calculating (610b) phase and amplitude values from the I (I₁, I₂) and Q (Q₁, Q₂) demodulated analog signals generated.

7. The reconstruction method (1) according to claim 6, **characterized in that** the step (600) of reconstructing the backscattered electromagnetic vector wave comprises a step of calculating the complex amplitude in all or part of the optical fiber (106) and for any projection axes in all or part of the optical fiber (106) as a function of the amplitude and phase values calculated from the I (I₁, I₂) and Q (Q₁, Q₂) demodulated analog signals generated.

8. The reconstruction method (1) according to one of the preceding claims, **characterized in that** the method comprises calculating a maximum amplitude comprising identifying an optimal angle associated with the maximum amplitude for any projection axis in all or part of the optical fiber, said optimal angle corresponding to the angle having the highest maximum amplitude among amplitudes of a plurality of angles corresponding to the projection axes in all or part of the optical fiber.

9. The reconstruction method (1) according to one of the preceding claims, **characterized in that** it comprises a step of detecting (700) a parameter of interest.

10. The reconstruction method (1) according to one of the preceding claims, **characterized in that** it comprises a step (730) of identifying a main optical axis of the light signal backscattered in all or part of the optical fiber (106) from a maximum amplitude calculation.

11. The reconstruction method (1) according to one of the preceding claims, **characterized in that** it comprises a step of modulating (220) the light signal by a modulator (104), before the step (200) of injecting into the optical fiber (106), said modulation allowing a shift in the frequency of the light signal by a value equal to v_{A}.

12. The reconstruction method (1) according to the preceding claim, **characterized in that** it comprises a step (510) of intermediate amplification of the electrical signal from the modulator (104) at the modulation frequency v_{A}, for example by an amplifier (204).

13. The reconstruction method (1) according to one of the preceding claims, **characterized in that** it comprises a step (530) of analog filtering, for example by at least one lowpass filter (207), making it possible to suppress the frequencies of the analog signals higher than a predetermined threshold.

14. A method (2) of optoelectronic measurement in a distributed acoustic detection system comprising reconstructing an electromagnetic vector wave backscattered in all or part of an optical fiber (106) according to one of claims 1 to 13 and measuring a deformation and/or a temperature variation in all or part of the optical fiber (106) as a function of the reconstructed backscattered electromagnetic vector wave.

15. The optoelectronic measurement method (2) according to claim 14, **characterized in that** it comprises measuring a deformation and/or a temperature variation in all or part of the optical fiber (106) on a reconstructed main optical axis.

16. A device (3) for reconstructing an electromagnetic vector wave backscattered in all or part of an optical fiber (106), said device comprising:
- A light source (101) configured to generate a light signal of a frequency v₀, suitable for injection into the optical fiber (106),
- An optical separation means (202, 303) configured to generate at least two orthogonally polarized backscattered light signals, producing a beat preferably of a frequency v_{A}, from a backscatter of the injected light signal and an electromagnetic wave from a local oscillator (107),
- At least two photodetectors (203), configured to convert the orthogonally polarized backscattered light signals into initial analog signals, wherein the device comprises
- An IQ demodulator (211, 302) arranged to perform an electrical homodyne detection, for IQ demodulating each of the initial analog signals so as to generate I (I₁, I₂) and Q (Q₁, Q₂) demodulated analog signals for each of the orthogonally polarized backscattered light signals, and
- A processing module (209) configured to reconstruct the electromagnetic vector wave backscattered in all or part of the optical fiber (106) from the I (I₁, I₂) and Q (Q₁, Q₂) demodulated analog signals generated.
